# EUROPEAN PATENT APPLICATION

(11) **EP 3 833 122 A1**
(43) Date of publication of application: **09.06.2021**
(21) Application number: 20855826.2
(22) Date of filing: 14.08.2020
(51) Int. Cl.: H04W 64/00

(54) **METHOD AND APPARATUS FOR POSITIONING AND GENERATING OFFLINE FINGERPRINT DATABASE**

(30) Priority: 30.08.2019 CN 201910817834
(71) Applicant: Huawei Technologies Co., Ltd., Longgang District Shenzhen Guangdong 518129 (CN)
(72) Inventor: SU, Junfeng, Guangdong 518129 (CN); LI, Wei, Guangdong 518129 (CN)
(74) Representative: Thun, Clemens
(86) International application number: PCT/CN2020/109305
(87) International publication number: WO 2021/036829

(57) **Abstract**

This application discloses a positioning method and apparatus and an offline fingerprint database generation method and apparatus. The positioning method includes: collecting, by a terminal device, a location fingerprint; searching, by the terminal device by using the CellID of the first base station, an offline fingerprint database for a first offline fingerprint that matches the CellID of the first base station, where the offline fingerprint database is stored in the terminal device, and the offline fingerprint database is configured to manage a plurality of offline fingerprints; searching, by the terminal device based on a reference point location in the first offline fingerprint and the channel parameters of the Q neighboring cell base stations, the offline fingerprint database for a plurality of second offline fingerprints that meet a first condition; and determining, by the terminal device, a location of the terminal device based on a signal identifier and the reference point location in the first offline fingerprint, signal identifiers and reference point locations in the plurality of second offline fingerprints, and the Q+1 signal identifiers in the location fingerprint.

## Description

### CROSS-REFERENCE TO RELATED APPLICATIONS

This application claims priority to Chinese Patent Application No. 201910817834.4, filed with the Chinese Patent Office on August 30, 2019 and entitled "POSITIONING METHOD AND APPARATUS, AND OFFLINE FINGERPRINT DATABASE GENERATION METHOD AND APPARATUS", which is incorporated herein by reference in its entirety.

### TECHNICAL FIELD

This application relates to the field of communications technologies, and in particular, to a positioning method and apparatus and an offline fingerprint database generation method and apparatus.

### BACKGROUND

With the rapid development of wireless communications technologies, there are a growing quantity of smart terminal devices, and various positioning technologies based on wireless communication are developed, such as indoor navigation in shopping malls, accurate push of location-based advertising, real-time location monitoring on elderly and children, and wireless positioning services related to network optimization.

Currently, a relatively common positioning method is a radio finger-printing pattern matching (radio finger-printing pattern matching, RFPM) positioning method. In the method, when positioning is required, a terminal device needs to send a positioning request to a positioning server. The positioning request includes cell information and received signal strength (received signal strength, RSS) that are reported by the terminal device. The positioning server compares the cell information and the received signal strength in the positioning request with historical positioning data by using a matching algorithm, to determine a location of the terminal device. The positioning server delivers the determined location of the terminal device to the terminal device.

The foregoing technical solution can be used only when the terminal device can be connected to the positioning server. In a scenario in which the terminal device is located indoors or in a tunnel or the like with a relatively poor signal and cannot normally communicate with the positioning server, the positioning server cannot obtain cell information and RSS of a current location of the terminal device, and therefore cannot perform positioning. In addition, considering privacy of the terminal device, the terminal device may need to disable a data network service, to prevent the positioning server from positioning the terminal device. As a result, the terminal device cannot determine a current location of the terminal device, thereby limiting a function of a related service, and affecting user experience.

If historical positioning data is delivered to the terminal device in advance, in a positioning process, the terminal device needs to search, based on the locally stored historical positioning data, for historical positioning data that matches cell information and received signal strength that are currently collected by the terminal device. A large amount of computation is required for positioning, a relatively long time is needed to obtain a positioning result, excessive processing resources of the terminal device are occupied, and precision of the positioning result is low, resulting in relatively poor user experience.

### SUMMARY

Embodiments of the present invention provide a positioning method and apparatus and an offline fingerprint database generation method and apparatus. The positioning method and apparatus and the offline fingerprint database generation method and apparatus help resolve a problem in an existing technology that a terminal device needs to rely on communication with a positioning server to ensure positioning precision in a wireless positioning process.

According to a first aspect, a positioning method is provided. A terminal device collects a location fingerprint, where the location fingerprint includes a signal identifier of a first base station, a cell identity (cell identity, CellID) of the first base station, signal identifiers of Q neighboring cell base stations of the first base station, and channel parameters of the Q neighboring cell base stations; the first base station is a serving base station accessed by the terminal device; and Q is a positive integer. The terminal device searches, by using the CellID of the first base station, an offline fingerprint database for a first offline fingerprint that matches the CellID of the first base station, where the offline fingerprint database is stored in the terminal device, and the offline fingerprint database is configured to manage a plurality of offline fingerprints; and each offline fingerprint includes a CellID, a signal identifier, and a channel parameter that are of a base station, and a reference point location. The terminal device searches, based on a reference point location in the first offline fingerprint and the channel parameters of the Q neighboring cell base stations, the offline fingerprint database for a plurality of second offline fingerprints that meet a first condition, where the first condition is that a channel parameter carried in an offline fingerprint is the same as one of the channel parameters of the Q neighboring cell base stations, and a reference point location carried in the offline fingerprint is within a first neighboring cell search range; and the first neighboring cell search range is a limited area including the reference point location in the first offline fingerprint. The terminal device determines a location of the terminal device based on a signal identifier and the reference point location in the first offline fingerprint, signal identifiers and reference point locations in the plurality of second offline fingerprints, and the Q+1 signal identifiers in the location fingerprint.

According to the foregoing method, when performing positioning by using the locally stored offline fingerprint database, the terminal device does not need to match a target location fingerprint against serving base station information and a plurality of pieces of neighboring cell base station information in a location fingerprint feature to determine a plurality of location fingerprint features with a relatively high similarity, but only needs to determine the first offline fingerprint based on the CellID of the first base station, and then determine the plurality of second offline fingerprints based on the reference point location in the first offline fingerprint, to determine the location of the terminal device based on the first offline fingerprint and the second offline fingerprints. This can reduce an amount of computation required for positioning of the terminal device, and improve positioning efficiency and positioning precision, and it is unnecessary to request information from a positioning server a plurality of times in a positioning process.

In a possible design, the terminal device determines the first neighboring cell base station search range based on a signal coverage range of the first base station by using the reference point location in the first offline fingerprint as a center. The terminal device searches, based on the first neighboring cell base station search range, the offline fingerprint database for L1 offline fingerprints whose reference point locations are within the first neighboring cell base station search range. The terminal device determines a plurality of second offline fingerprints from the L1 offline fingerprints, where the plurality of second offline fingerprints are a plurality of offline fingerprints including channel parameters that are the same as the channel parameters of the Q neighboring cell base stations.

In the foregoing technical solution, a second neighboring cell search range can be effectively determined based on a first location and a signal coverage range determined by a signal standard corresponding to the serving base station in the first serving base station information, to quickly determine second offline fingerprints that match neighboring cell base stations in a target location fingerprint.

In a possible design, the offline fingerprint further includes a grid identifier of a grid in which the reference point location is located. The terminal device determines a first grid identifier of a first grid in which the reference point location in the first offline fingerprint is located. The terminal device determines K1 offline fingerprints corresponding to grid identifiers of R neighboring grids corresponding to the first grid, where the R neighboring grids corresponding to the first grid are the first neighboring cell base station search range; and R and K1 are positive integers. The terminal device determines a plurality of second offline fingerprints from the K1 offline fingerprints, where the plurality of second offline fingerprints are a plurality of offline fingerprints including channel parameters that are the same as the channel parameters of the Q neighboring cell base stations.

In a possible design, the terminal device matches each of the signal identifiers of the Q neighboring cell base stations against the signal identifiers of the plurality of second offline fingerprints, to determine weights corresponding to the plurality of second offline fingerprints; and then the terminal device determines the location of the terminal device based on a weight corresponding to the first offline fingerprint, the reference point location of the first offline fingerprint, the weights corresponding to the plurality of second offline fingerprints, and reference point locations of the plurality of second offline fingerprints.

Compared with a method in an existing technology in which a positioning server needs to traverse all location fingerprint features in a location fingerprint database based on a k-NearestNeighbor (k-NearestNeighbor, KNN) algorithm, to determine a plurality of location fingerprint features with a relatively high similarity for matching, in this embodiment of this application, according to the foregoing method, when performing positioning by using the locally stored offline fingerprint database, the terminal device may determine the matched first offline fingerprint and the plurality of matched second offline fingerprints based only on the CellID and the grid identifier of the serving base station. Then, the location is determined based on the matched first offline fingerprint and second offline fingerprints. This can reduce an amount of computation required for positioning of the terminal device, and improve precision of offline positioning and an offline positioning effect.

In a possible design, the offline fingerprint database further includes a relationship between a CellID of an offline fingerprint and a grid identifier of a grid in which the offline fingerprint is located. If determining that the offline fingerprint database does not include the first offline fingerprint that matches the CellID of the first base station, the terminal device searches for the first offline fingerprint based on the relationship between a CellID of an offline fingerprint and a grid identifier of a grid in which the offline fingerprint is located, where the first offline fingerprint is an offline fingerprint corresponding to a second grid identifier of a grid in which the CellID of the first base station is located.

In the foregoing embodiment, offline fingerprints in a grid are filtered, so that impact of a pseudo base station on positioning can be effectively eliminated. Moreover, with the relationship between a CellID of an offline fingerprint and a grid identifier of a grid in which the offline fingerprint is located, it can be ensured that the terminal device can effectively search for the first offline fingerprint by using the CellID in a positioning process, thereby improving a positioning speed.

In a possible design, there are N0 first offline fingerprints, and N0 is greater than 1. The terminal device searches, based on a reference point location of each of the N0 first offline fingerprints and the channel parameters of the Q neighboring cell base stations, the offline fingerprint database for W second offline fingerprints that meet the first condition, where W is a positive integer. The terminal device determines the location of the terminal device based on signal identifiers and reference point locations in the N0 first offline fingerprints, signal identifiers and reference point locations in the W second offline fingerprints, and the Q+1 signal identifiers in the location fingerprint.

In the foregoing technical solution, the terminal device determines the location of the terminal device based on the signal identifiers and the reference point locations in the N0 first offline fingerprints, the signal identifiers and the reference point locations in the W second offline fingerprints, and the Q+1 signal identifiers in the location fingerprint. Therefore, the terminal device uses more offline fingerprints, thereby improving positioning precision.

According to a second aspect, an offline fingerprint database generation method is provided. A positioning server receives M location fingerprint features from a terminal device, where the M location fingerprint features include M first locations and information about a plurality of base stations in total, the plurality of base stations are M serving base stations in cells of the M first locations and N neighboring cell base stations corresponding to the M serving base stations, and the plurality of location fingerprint features include cell identities CellIDs, signal identifiers, and channel parameters of the M serving base stations, and signal identifiers and channel parameters of the N neighboring cell base stations. The positioning server matches the CellIDs of the M serving base stations with the signal identifiers and the channel parameters in the information about the plurality of base stations, to generate P offline fingerprints, where P is greater than M; the plurality of offline fingerprints are stored in an offline fingerprint database of the positioning server; each offline fingerprint includes a CellID, a signal identifier, and a channel parameter that are of a base station, and a reference point location; and M, N, and P are positive integers. The CellID included in each offline fingerprint is a CellID of any one of the M serving base stations, and the reference point location is related to a first location corresponding to the CellID carried in the offline fingerprint. The positioning server sends the offline fingerprint database to the terminal device.

According to the technical solution provided in this embodiment of this application, compared with a location fingerprint feature in an existing technology, in this embodiment, the CellIDs of the M serving base stations are matched with the signal identifiers and the channel parameters in the information about the plurality of base stations, to generate the P offline fingerprints, so that redundant information in the location fingerprint features can be effectively processed. This effectively improves utilization of information in the location fingerprint features, improves precision of offline positioning of the terminal device, and improves practicability of offline positioning performed locally by the terminal device.

It should be noted that the M serving base stations overlap with the N neighboring cell base stations.

In a possible design, the positioning server matches CellIDs of serving base stations in a plurality of location fingerprint features that meet a second condition with the channel parameters of the N neighboring cell base stations corresponding to the M serving base stations, to determine CellIDs of the N neighboring cell base stations corresponding to the M serving base stations, where the second condition is that a channel standard of a serving base station carried in a location fingerprint feature is the same as a channel standard of a serving base station carried in a location fingerprint feature corresponding to the neighboring cell base stations, and a first location carried in the location fingerprint feature is within a second neighboring cell search range; and the second neighboring cell search range is a limited area including a first location in the location fingerprint feature corresponding to the neighboring cell base stations. The positioning server generates the P offline fingerprints based on the M location fingerprint features and the CellIDs of the N neighboring cell base stations corresponding to the M serving base stations.

In the foregoing embodiment, the CellIDs of the serving base stations in the plurality of location fingerprint features that meet the second condition are matched with the channel parameters of the N neighboring cell base stations corresponding to the M serving base stations, to determine the CellIDs of the N neighboring cell base stations corresponding to the M serving base stations, so that neighboring cell base station information may also be used as location fingerprint features for positioning. Therefore, valid information in the location fingerprint features is extracted, so that the information of the location fingerprint features can be better used, and positioning precision can be improved.

In a possible design, the positioning server generates M offline fingerprints based on the M first locations and information about the M serving base stations. The positioning server generates M×N offline fingerprints based on the M first locations, information about the N neighboring cell base stations corresponding to the M serving base stations, and the CellIDs of the N neighboring cell base stations corresponding to the M serving base stations, where P is equal to M×(N+1).

In the foregoing embodiment, the M×N offline fingerprints are generated based on the M first locations, the information about the N neighboring cell base stations corresponding to the M serving base stations, and the CellIDs of the N neighboring cell base stations corresponding to the M serving base stations, so that valid information in the location fingerprint features can be effectively extracted, and information of the location fingerprint features can be better used, to improve positioning precision, and reduce processing complexity of the positioning server.

In a possible design, the location fingerprint features further include positioning sources of the first locations; and the method further includes:

The positioning server determines the positioning sources of the M first locations as positioning sources of reference point locations in the correspondingly generated offline fingerprints; and the positioning server determines priorities of the offline fingerprints based on the positioning sources of the reference point locations in the offline fingerprints, and filters the offline fingerprints corresponding to the CellIDs of the base stations, where an offline fingerprint corresponding to a CellID of a same base station in the offline fingerprint database is a filtered offline fingerprint corresponding to the CellID of the base station.

Through offline fingerprint filtering, the offline fingerprint database retains only information of reliable location fingerprint features, thereby effectively improving accuracy of offline positioning of the terminal device.

In a possible design, the positioning server searches, based on the CellIDs of the M serving base stations and the CellIDs of the N neighboring cell base stations corresponding to the M serving base stations, for P groups of base station information corresponding to a same CellID. The positioning server determines the P offline fingerprints based on the P groups of base station information and a first location in a location fingerprint feature in which each group of base station information is located, where a reference point position in each offline fingerprint is related to the first location in each group of base station information; and a signal identifier in each offline fingerprint is related to a signal identifier in each group of base station information.

In the foregoing embodiment, valid information in the location fingerprint features can be effectively compressed, to reduce a size of the offline fingerprint database, for the terminal device to locally store the offline fingerprint database, thereby improving precision of offline positioning of the terminal device, and improving practicability of offline positioning performed locally by the terminal device.

In a possible design, the location fingerprint features further include positioning sources of the first locations. For each of a plurality of location fingerprint features corresponding to each group of base station information, the positioning server determines, based on a positioning source of a first location in the location fingerprint feature, a positioning source priority of the location fingerprint feature; the positioning server determines, based on the positioning source priority of the location fingerprint feature and a signal identifier in the location fingerprint feature, a weight corresponding to the location fingerprint feature; the positioning server determines, based on weights corresponding to the plurality of location fingerprint features and first locations in the plurality of location fingerprint features, reference point locations in offline fingerprint features corresponding to the group of base station information; and the positioning server determines, based on the weight corresponding to the location fingerprint feature and the signal identifier in the location fingerprint feature, a signal identifier of a base station corresponding to the group of base station information.

In the foregoing embodiment, information in the location fingerprint features can be effectively extracted based on the positioning sources and the signal identifiers, so that reliability of the offline fingerprint features can be improved, and practicability of offline positioning performed locally by the terminal device can be improved.

In a possible design, the second neighboring cell search range is an area determined by the positioning server by using the first location in the location fingerprint feature corresponding to the neighboring cell base stations as a center and based on a signal coverage range determined by a signal standard corresponding to the serving base station in the location fingerprint feature corresponding to the neighboring cell base stations.

In the foregoing technical solution, the second neighboring cell search range can be effectively determined based on the first location in the to-be-matched location fingerprint feature and the signal coverage range determined by the signal standard corresponding to the serving base station in the serving base station information, to quickly determine serving base station information that matches a channel parameter of a neighboring cell base station in the to-be-matched location fingerprint feature, thereby effectively using neighboring cell base station information.

In a possible design, a channel parameter of a first neighboring cell base station corresponds to CellIDs of K0 serving base stations meeting the second condition, and the first neighboring cell base station is one of the N neighboring cell base stations. The positioning server determines a center of K0 first locations based on the K0 first locations, where K0 is a positive integer. The positioning server determines, based on the center and Euclidean distances between the center and the K0 first locations, a CellID of a serving base station that matches the channel parameter of the first neighboring cell base station, where the CellID of the serving base station that matches the channel parameter of the first neighboring cell base station is a CellID of a serving base station corresponding to a first location closest to the center.

In the foregoing technical solution, the serving base station that matches the channel parameter of the first neighboring cell base station is filtered out by using the center and the Euclidean distances between the center and the K0 first locations, thereby resolving a problem that a CellID of the first neighboring cell base station cannot be determined when the channel parameter of the first neighboring cell base station corresponds to the CellIDs of the K0 serving base stations meeting the second condition.

In a possible design, the offline fingerprint further includes a grid identifier of a grid in which the reference point location is located.

In the foregoing technical solution, the grid identifier of the grid in which the reference point location is located is included, so that search efficiency of searching for a first offline fingerprint and a second offline fingerprint by the terminal device in a positioning process can be improved, and a positioning speed can be improved.

In a possible design, the positioning server determines N1 offline fingerprints in each grid based on the grid identifier of the grid in which the reference point location is located. The positioning server filters the N1 offline fingerprints based on signal identifiers in the N1 offline fingerprints, where N1 is a positive integer; an offline fingerprint obtained after grid filtering is an offline fingerprint corresponding to the grid; and a relationship between a CellID in an offline fingerprint before grid filtering and a grid identifier of a grid in which the offline fingerprint before grid filtering is located is stored in the offline fingerprint database.

In the foregoing technical solution, the offline fingerprints in the grid are filtered, so that impact of a pseudo base station on positioning can be effectively eliminated. Moreover, it can be ensured that the terminal device can effectively search for a first offline fingerprint by using a CellID in a positioning process, thereby improving a positioning speed.

According to a third aspect, an embodiment of this application provides a positioning apparatus, including:
a collection module, configured to collect a location fingerprint, where the location fingerprint includes a signal identifier of a first base station, a cell identity CellID of the first base station, signal identifiers of Q neighboring cell base stations of the first base station, and channel parameters of the Q neighboring cell base stations; the first base station is a serving base station accessed by the terminal device; and Q is a positive integer greater than 1; and
a processing module, configured to search, by using the CellID of the first base station, an offline fingerprint database for a first offline fingerprint that matches the CellID of the first base station, where the offline fingerprint database is stored in the terminal device, and the offline fingerprint database is configured to manage a plurality of offline fingerprints; and each offline fingerprint includes a CellID, a signal identifier, and a channel parameter that are of a base station, and a reference point location; search, based on a reference point location in the first offline fingerprint and the channel parameters of the Q neighboring cell base stations, the offline fingerprint database for a plurality of second offline fingerprints that meet a first condition, where the first condition is that a channel parameter carried in an offline fingerprint is the same as one of the channel parameters of the Q neighboring cell base stations, and a reference point location carried in the offline fingerprint is within a first neighboring cell search range; and the first neighboring cell search range is a limited area including the reference point location in the first offline fingerprint; and determine a location of the terminal device based on a signal identifier and the reference point location in the first offline fingerprint, signal identifiers and reference point locations in the plurality of second offline fingerprints, and the Q+1 signal identifiers in the location fingerprint.

In a possible design, the processing module is specifically configured to: determine the first neighboring cell base station search range based on a signal coverage range of the first base station by using the reference point location in the first offline fingerprint as a center; search, based on the first neighboring cell base station search range, the offline fingerprint database for L1 offline fingerprints whose reference point locations are within the first neighboring cell base station search range; and determine a plurality of second offline fingerprints from the L1 offline fingerprints, where the plurality of second offline fingerprints are a plurality of offline fingerprints including channel parameters that are the same as the channel parameters of the N neighboring cell base stations.

In a possible design, the offline fingerprint further includes a grid identifier of a grid in which the reference point location is located, and the processing module is specifically configured to: determine a first grid identifier of a first grid in which the reference point location in the first offline fingerprint is located; determine K1 offline fingerprints corresponding to grid identifiers of R neighboring grids corresponding to the first grid, where the R neighboring grids corresponding to the first grid are the first neighboring cell base station search range; and R and K1 are positive integers; and determine a plurality of second offline fingerprints from the K1 offline fingerprints, where the plurality of second offline fingerprints are a plurality of offline fingerprints including channel parameters that are the same as the channel parameters of the Q neighboring cell base stations.

In a possible design, the offline fingerprint database further includes a relationship between a CellID of an offline fingerprint and a grid identifier of a grid in which the offline fingerprint is located, and the processing module is specifically configured to: if determining that the offline fingerprint database does not include the first offline fingerprint that matches the CellID of the first base station, search for the first offline fingerprint based on the relationship between a CellID of an offline fingerprint and a grid identifier of a grid in which the offline fingerprint is located, where the first offline fingerprint is an offline fingerprint corresponding to a second grid identifier of a grid in which the CellID of the first base station is located.

In a possible design, the processing module is specifically configured to: match each of the signal identifiers of the Q neighboring cell base stations against the signal identifiers of the plurality of second offline fingerprints, to determine weights corresponding to the plurality of second offline fingerprints; and then the terminal device determines the location of the terminal device based on a weight corresponding to the first offline fingerprint, the reference point location of the first offline fingerprint, the weights corresponding to the plurality of second offline fingerprints, and reference point locations of the plurality of second offline fingerprints.

In a possible design, there are N0 first offline fingerprints, and N0 is greater than 1; and the processing module is further configured to: search, based on a reference point location of each of the N0 first offline fingerprints and the channel parameters of the N neighboring cell base stations, the offline fingerprint database for W second offline fingerprints that meet the first condition, where W is a positive integer; and determine the location of the terminal device based on signal identifiers and reference point locations in the N0 first offline fingerprints, signal identifiers and reference point locations in the W second offline fingerprints, and the N+1 signal identifiers in the location fingerprint.

According to a fourth aspect, an embodiment of this application provides an offline fingerprint database generation apparatus, including:
a receiving module, configured to receive M location fingerprint features from a terminal device, where the M location fingerprint features include M first locations and information about a plurality of base stations in total, the plurality of base stations are M serving base stations in cells of the M first locations and N neighboring cell base stations corresponding to the M serving base stations, and the plurality of location fingerprint features include cell identities CellIDs, signal identifiers, and channel parameters of the M serving base stations, and signal identifiers and channel parameters of the N neighboring cell base stations;
a processing module, configured to match the CellIDs of the M serving base stations with the signal identifiers and the channel parameters in the information about the plurality of base stations, to generate P offline fingerprints, where P is greater than M; the plurality of offline fingerprints are stored in an offline fingerprint database of a positioning server; each offline fingerprint includes a CellID, a signal identifier, and a channel parameter that are of a base station, and a reference point location; M, N, and P are positive integers; and the CellID included in each offline fingerprint is a CellID of any one of the M serving base stations, and the reference point location is related to a first location corresponding to the CellID carried in the offline fingerprint; and
a sending module, configured to send the offline fingerprint database to the terminal device.

In a possible design, the processing module is specifically configured to: match CellIDs of serving base stations in a plurality of location fingerprint features that meet a second condition with the channel parameters of the N neighboring cell base stations corresponding to the M serving base stations, to determine CellIDs of the N neighboring cell base stations corresponding to the M serving base stations, where the second condition is that a channel standard of a serving base station carried in a location fingerprint feature is the same as a channel standard of a serving base station carried in a location fingerprint feature corresponding to the neighboring cell base stations, and a first location carried in the location fingerprint feature is within a second neighboring cell search range; and the second neighboring cell search range is a limited area including a first location in the location fingerprint feature corresponding to the neighboring cell base stations; and generate the P offline fingerprints based on the M location fingerprint features and the CellIDs of the N neighboring cell base stations corresponding to the M serving base stations.

In a possible design, the processing module is specifically configured to: generate M offline fingerprints based on the M first locations and information about the M serving base stations; and generate M×N offline fingerprints based on the M first locations, information about the N neighboring cell base stations corresponding to the M serving base stations, and the CellIDs of the N neighboring cell base stations corresponding to the M serving base stations, where P is equal to M×(N+1).

In a possible design, the location fingerprint features further include positioning sources of the first locations; and the processing module is further configured to: determine the positioning sources of the M first locations as positioning sources of reference point locations in the correspondingly generated offline fingerprints; and determine priorities of the offline fingerprints based on the positioning sources of the reference point locations in the offline fingerprints, and filter the offline fingerprints corresponding to the CellIDs of the base stations, where an offline fingerprint corresponding to a CellID of a same base station in the offline fingerprint database is a filtered offline fingerprint corresponding to the CellID of the base station.

In a possible design, the processing module is specifically configured to: search, based on the CellIDs of the M serving base stations and the CellIDs of the N neighboring cell base stations corresponding to the M serving base stations, for P groups of base station information corresponding to a same CellID; and determine the P offline fingerprints based on the P groups of base station information and a first location in a location fingerprint feature in which each group of base station information is located, where a reference point position in each offline fingerprint is related to the first location in each group of base station information; and a signal identifier in each offline fingerprint is related to a signal identifier in each group of base station information.

In a possible design, the location fingerprint features further include positioning sources of the first locations. For each of a plurality of location fingerprint features corresponding to each group of base station information, the processing module is specifically configured to: determine, based on a positioning source of a first location in the location fingerprint feature, a positioning source priority of the location fingerprint feature; determine, based on the positioning source priority of the location fingerprint feature and a signal identifier in the location fingerprint feature, a weight corresponding to the location fingerprint feature; determine, based on weights corresponding to the plurality of location fingerprint features and first locations in the plurality of location fingerprint features, reference point locations in offline fingerprint features corresponding to the group of base station information; and determine, based on the weight corresponding to the location fingerprint feature and the signal identifier in the location fingerprint feature, a signal identifier of a base station corresponding to the group of base station information.

In a possible design, the second neighboring cell search range is an area determined by the positioning server by using the first location in the location fingerprint feature corresponding to the neighboring cell base stations as a center and based on a signal coverage range determined by a signal standard corresponding to the serving base station in the first serving base station information.

In a possible design, a channel parameter of a first neighboring cell base station corresponds to CellIDs of K0 serving base stations meeting the second condition, and the first neighboring cell base station is one of the N neighboring cell base stations; and the processing module is specifically configured to: determine a center of K0 first locations based on the K0 first locations; and determine, based on the center and Euclidean distances between the center and the K0 first locations, a CellID of a serving base station that matches the channel parameter of the first neighboring cell base station, where the CellID of the serving base station that matches the channel parameter of the first neighboring cell base station is a CellID of a serving base station corresponding to a first location closest to the center; and K0 is a positive integer.

In a possible design, the offline fingerprint further includes a grid identifier of a grid in which the reference point location is located.

In a possible design, the processing module is further configured to: determine N1 offline fingerprints in each grid based on the grid identifier of the grid in which the reference point location is located; and filter the N1 offline fingerprints based on signal identifiers in the N1 offline fingerprints, where an offline fingerprint obtained after filtering is an offline fingerprint corresponding to the grid; and a relationship between a CellID in an offline fingerprint before grid filtering and a grid identifier of a grid in which the offline fingerprint before grid filtering is located is stored in the offline fingerprint database.

According to a fifth aspect, an embodiment of this application provides a communication apparatus. The apparatus includes a processor, configured to implement the method described in the first aspect. The apparatus may further include a memory, configured to store an instruction and/or data. The memory is coupled to the processor. When executing the program instruction stored in the memory, the processor may implement the method described in the first aspect. The apparatus may further include a communications interface. The communications interface is configured for the apparatus to communicate with another device. For example, the communications interface may be a transceiver, a circuit, a bus, a module, a pin, or another type of communications interface. The another device may be a network device or the like. In a possible device, the apparatus includes:
a memory, configured to store a program instruction;
a communications interface, configured to collect a location fingerprint; and
a processor, configured to search, by using the CellID of the first base station, an offline fingerprint database for a first offline fingerprint that matches the CellID of the first base station, where the offline fingerprint database is stored in the terminal device, and the offline fingerprint database is configured to manage a plurality of offline fingerprints; and each offline fingerprint includes a CellID, a signal identifier, and a channel parameter that are of a base station, and a reference point location; search, based on a reference point location in the first offline fingerprint and the channel parameters of the Q neighboring cell base stations, the offline fingerprint database for a plurality of second offline fingerprints that meet a first condition, where the first condition is that a channel parameter carried in an offline fingerprint is the same as one of the channel parameters of the Q neighboring cell base stations, and a reference point location carried in the offline fingerprint is within a first neighboring cell search range; and the first neighboring cell search range is a limited area including the reference point location in the first offline fingerprint; and determine a location of the terminal device based on a signal identifier and the reference point location in the first offline fingerprint, signal identifiers and reference point locations in the plurality of second offline fingerprints, and the Q+1 signal identifiers in the location fingerprint.

For functions of the processor and the communications interface, refer to the descriptions in the first aspect. Details are not described herein again.

According to a sixth aspect, an embodiment of this application provides a communication apparatus. The apparatus includes a processor, configured to implement the method described in the second aspect. The apparatus may further include a memory, configured to store an instruction and/or data. The memory is coupled to the processor. When executing the program instruction stored in the memory, the processor may implement the method described in the second aspect. The apparatus may further include a communications interface. The communications interface is configured for the apparatus to communicate with another device. For example, the communications interface may be a transceiver, a circuit, a bus, a module, a pin, or another type of communications interface. The another device may be a terminal device or the like. In a possible device, the apparatus includes:
a memory, configured to store a program instruction;
a processor, configured to match the CellIDs of the M serving base stations with the signal identifiers and the channel parameters in the information about the plurality of base stations, to generate P offline fingerprints, where P is greater than M; the plurality of offline fingerprints are stored in the offline fingerprint database; each offline fingerprint includes a CellID, a signal identifier, and a channel parameter that are of a base station, and a reference point location; M, N, and P are positive integers; and the CellID included in each offline fingerprint is a CellID of any one of the M serving base stations, and the reference point location is related to a first location corresponding to the CellID carried in the offline fingerprint; and
a communications interface, whose receiving function is used to receive M location fingerprint features from a terminal device, and whose sending function is used to send an offline fingerprint database of a positioning server to the terminal device in a method procedure of the second aspect.

For functions of the processor and the communications interface, refer to the descriptions in the second aspect. Details are not described herein again.

According to a seventh aspect, an embodiment of this application further provides a computer-readable storage medium, including an instruction. When the instruction is run on a computer, the computer is enabled to perform the method performed by the positioning server in the first aspect.

According to an eighth aspect, an embodiment of this application further provides a computer-readable storage medium, including an instruction. When the instruction is run on a computer, the computer is enabled to perform the method performed by the terminal device in the first aspect.

According to a ninth aspect, an embodiment of this application further provides a computer program product, including an instruction. When the instruction is run on a computer, the computer is enabled to perform the method performed by the positioning server in the first aspect.

According to a tenth aspect, an embodiment of this application further provides a computer program product, including an instruction. When the instruction is run on a computer, the computer is enabled to perform the method performed by the terminal device in the first aspect.

According to an eleventh aspect, an embodiment of this application provides a chip system. The chip system includes a processor, and may further include a memory, to implement the method performed by the positioning server in the first aspect. The chip system may include a chip, or may include a chip and another discrete device.

According to a twelfth aspect, an embodiment of this application provides a chip system. The chip system includes a processor, and may further include a memory, to implement the method performed by the terminal device in the first aspect. The chip system may include a chip, or may include a chip and another discrete device.

According to a thirteenth aspect, an embodiment of this application provides a system. The system includes the communication apparatus according to the third aspect and the communication apparatus according to the fourth aspect.

According to a fourteenth aspect, an embodiment of this application provides a system. The system includes the communication apparatus according to the fifth aspect and the communication apparatus according to the sixth aspect.

For beneficial effects of the third aspect to the fourteenth aspect and implementations thereof, refer to descriptions of beneficial effects of the method in the first aspect and implementations thereof.

### BRIEF DESCRIPTION OF DRAWINGS

FIG. 1 is a schematic diagram of a system architecture according to an embodiment of this application;
FIG. 2 is a schematic diagram of a cell according to an embodiment of this application;
FIG. 3 is a schematic flowchart of an offline fingerprint database generation method according to an embodiment of this application;
FIG. 4 is a schematic diagram of a positioning method according to an embodiment of this application;
FIG. 5a is a schematic diagram of a second neighboring cell search range according to an embodiment of this application;
FIG. 5b is a schematic diagram of a cell according to an embodiment of this application;
FIG. 6 is a schematic diagram of a first neighboring cell search range according to an embodiment of this application;
FIG. 7 is a schematic diagram of a grid according to an embodiment of this application;
FIG. 8 is a schematic structural diagram of an offline fingerprint database generation apparatus according to an embodiment of this application;
FIG. 9 is a schematic structural diagram of a positioning apparatus according to an embodiment of this application;
FIG. 10 is a schematic structural diagram of a communication apparatus according to an embodiment of this application; and
FIG. 11 is a schematic structural diagram of a communication apparatus according to an embodiment of this application.

### DETAILED DESCRIPTION

When a user uses a location-related application such as weather forecast, advertisement push, location search, or news query, a server corresponding to the application needs to push related information based on positioning information of a terminal device. In an existing technology, in a GPS signal loss area (for example, a GPS module in the terminal device is faulty, or the terminal device is moved to an area in which a GPS signal cannot be found), the terminal device cannot obtain a location of the terminal device based on the GPS module of the terminal device. In this case, the terminal device needs to perform location positioning by using an existing RFPM positioning method. According to the method, a positioning function of the terminal device can be implemented without relying on a GPS signal. In the method, when positioning is required, the terminal device needs to send a positioning request to a positioning server. The positioning request includes cell information and signal identifier sampling information that are reported by the terminal device. The positioning server compares the cell information and the signal identifier sampling information in the positioning request with a location fingerprint feature in a location fingerprint database by using a matching algorithm, to determine the location of the terminal device. The positioning server delivers the determined location of the terminal device to the terminal device. However, when the method is used, in a scenario in which the terminal device is located indoors or in a tunnel or the like with a relatively poor signal and cannot normally communicate with the positioning server, the positioning server cannot obtain cell information and signal identifier sampling information of a current location of the terminal device, and therefore cannot position the terminal device.

Based on the foregoing technical problem, this application proposes that a location fingerprint feature learned by the positioning server may be processed, to effectively extract positioning information of the location fingerprint feature, and then an offline fingerprint may be generated based on the processed location fingerprint feature, and sent to the terminal device for storage. In this way, when the terminal device uses the RFPM positioning method, the terminal device only needs to locally query the offline fingerprint based on cell information and signal identifier sampling information that are collected by the terminal device, to determine current location information of the terminal device, instead of relying on communication with the positioning server, so that the terminal device can still achieve a positioning objective when reaching an area in which the terminal device cannot communicate with the positioning server. In addition, because positioning information of the location fingerprint feature is effectively extracted, redundant information in the location fingerprint feature is reduced, and positioning precision of the terminal device can be effectively improved based on a same amount of positioning data.

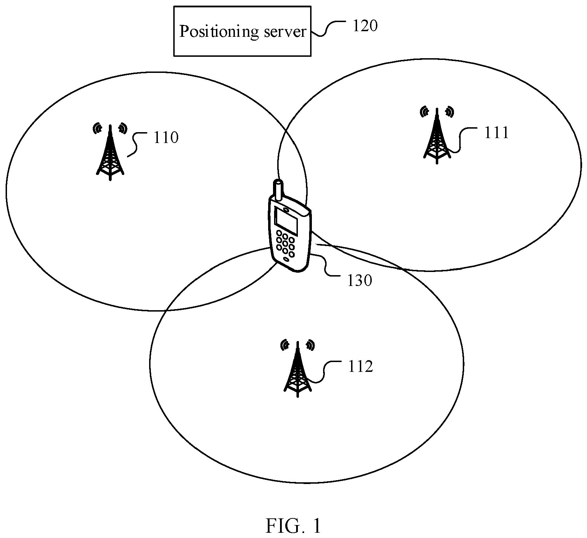

FIG. 1 is a schematic diagram of a network architecture to which an embodiment of this application may be applied. The network architecture shown in FIG. 1 includes a plurality of base stations 110 to 112, a positioning server 120, and a terminal device 130. The positioning server 120 may be configured to collect a location fingerprint feature reported by the terminal device 130, process positioning information to generate an offline fingerprint, and send the offline fingerprint to the terminal device 130, so that the terminal device 130 performs positioning based on the offline fingerprint. The base station 110 may be configured to provide a service for the terminal device 130. In this application, a cell that provides a service for the terminal device 130 is referred to as a serving cell, and cells corresponding to the base station 111 and the base station 112 are neighboring cells of the serving cell of the terminal device 130. It should be understood that the network architecture shown in FIG. 1 is described by using an example of including only one terminal device. However, this embodiment of this application is not limited thereto. For example, the network architecture may alternatively include more terminal devices. Similarly, the network architecture may alternatively include more base stations and positioning servers, and may further include another device. It should be noted that in FIG. 1, one base station device corresponds to one cell for example. However, this embodiment of this application is not limited thereto. For example, in some possible network architectures, one base station device may correspond to more than one cell. The method provided in this application is applicable regardless of a quantity of cells corresponding to one base station device.

The terminal device in FIG. 1 includes a device that provides a user with voice and/or data connectivity, for example, may include a handheld device with a wireless connection function or a processing device connected to a wireless modem. The terminal device may communicate with a core network by using a radio access network (radio access network, RAN), to exchange voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a mobile (mobile), a remote station (remote station), an access point (access point, AP), a remote terminal device (remote terminal), an access terminal device (access terminal), a user terminal device (user terminal), a user agent (user agent), a user device (user device), or the like, for example, may include a mobile phone (or referred to as a "cellular" phone), a computer with a mobile terminal device, a portable, pocket-sized, handheld, computer built-in, or in-vehicle mobile apparatus, or a smart wearable device, for example, a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA); and may further include a limited device, for example, a device with relatively low power consumption, a device with a limited storage capability, or a device with a limited computing capability, for example, include an information sensing device such as a barcode, a radio frequency identification (radio frequency identification, RFID), a sensor, a global positioning system (global positioning system, GPS), or a laser scanner.

For example but not for limitation, in this embodiment of this application, the terminal device may alternatively be a wearable device. The wearable device may also be referred to as a wearable smart device, and is a general term for wearable devices such as glasses, gloves, watches, clothing, and shoes that are developed by intelligently designing everyday wearing by applying a wearable technology. The wearable device is a portable device that is directly worn on a body or integrated into clothing or accessories of a user. The wearable device is more than a hardware device, and implements powerful functions through software support, data exchange, and cloud interaction. General wearable smart devices include a full-featured and large-sized device that can implement all or some functions without a smart phone, such as a smartwatch or smart glasses; and a device that focuses on only one type of application function and needs to be used in cooperation with another device such as a smart phone, such as various smart bands, smart helmets, and smart jewelry for physical sign monitoring.

A network device in FIG. 1 including, for example, a base station (for example, an access point) may be a device that communicates with a wireless terminal device over an air interface in an access network by using one or more cells. The network device may be configured to mutually convert a received over-the-air frame and an Internet protocol (IP) packet and serve as a router between the terminal device and a rest portion of the access network. The rest portion of the access network may include an IP network. The network device may further coordinate attribute management on the air interface. For example, the network device may include an evolved Node B (NodeB or eNB or e-NodeB, evolved Node B) in a long term evolution (long term evolution, LTE) system or an evolved LTE system (LTE-Advanced, LTE-A), or may include a next generation node B (next generation node B, gNB) in a fifth generation (fifth generation, 5G) new radio (new radio, NR) system, or may include a centralized unit (centralized unit, CU) and a distributed unit (distributed unit, DU) in a cloud radio access network (CloudRAN) system. This is not limited in this embodiment of this application.

The positioning server in FIG. 1 is a device or a network element that can position the terminal device based on a location computation algorithm, for example, may be a computer apparatus, a server (server), a cloud service platform, an evolved service mobile location center (evolved serving mobile location center, E-SMLC), a service location protocol (service location protocol, SLP) network element, or a location management function (location management function, LMF) network element. The computer apparatus may include, for example, a desktop computer, a tablet computer, or an in-vehicle computer.

Further, as shown in FIG. 1, the terminal device 130 is located in coverage areas of the base stations 110 to 112. For example, due to a requirement for traffic navigation or location information sharing on the terminal device 130, or when the terminal device 130 logs in to a social application, for example, logs in to WeChat, and needs a social network server to provide location information for the terminal device, the terminal device 130 may trigger a positioning procedure. The terminal device uses a currently accessed serving cell and a neighboring cell as cells that need to be measured, and uses measured cell information and signal identifiers as a target location fingerprint that needs to be positioned currently by the terminal device 130. For example, the target location fingerprint may include cell information respectively corresponding to the base stations 110 to 112 and signal strength (received signal strength, RSS) of signals respectively transmitted by the base stations 110 to 112 and received by the terminal device 130. The terminal device may determine a location of the terminal device by using a matching algorithm by matching the target location fingerprint against an offline fingerprint downloaded in advance and locally stored, instead of establishing a communication connection to the positioning server to obtain location information of a current location of the terminal device, and therefore does not need to rely on communication with the positioning server to obtain location information as in the existing RFPM positioning method.

The following first describes some technical terms in this application, to facilitate understanding by a person skilled in the art.
(1) A principle of a positioning method based on a location fingerprint is as follows: Because a terminal device may measure, at different locations, signals sent by different base stations, signal identifiers such as cell information and received signal strength (received signal strength, RSS) that are measured by the terminal device may be used as a location fingerprint feature of a current location of the terminal device. The current location of the terminal device may be determined by comparing a location fingerprint feature corresponding to each known location in historical positioning data with the location fingerprint feature currently obtained through measurement by the terminal device.
(2) The signal identifiers may be information in a measurement report of the terminal device, information collected over an interface, or the like, and parameters of the base stations. The information in the measurement report of the terminal device may include reference signal received power (reference signal received power, RSRP), reference signal received quality (reference signal received quality, RSRQ), a signal to interference plus noise ratio (signal to interference plus noise ratio, SINR), a timing advance (timing advance, TA), an evolved Node B identification (evolved Node B identification, eNB-ID), a cell identity (cell identity, CellID), transmit power of the terminal device, a channel parameter, and the like. The CellID may include a mobile country code (mobile country code, MCC), a mobile network code (mobile network code, MNC), a cell tower identification (Cell Tower ID, CID), a base station location area code (Location Area Code, LAC), and radio access technology RAT or other identifiers. The channel parameter may include parameters such as a physical-layer cell identity (physical-layer Cell identity, PCI) and an absolute radio frequency channel number (absolute radio frequency channel number, ARFCN). Specifically, the PCI may include a primary synchronization signal (PSS) and a secondary synchronization signal (Secondary Synchronization Signal, SSS). The PSS occupies six RBs of system bandwidth in frequency domain, and indicates an identifier (Physical Identity, PI) in a physical cell group. The identifier may have three different sequences 0, 1, and 2. The SSS occupies six RBs in frequency domain, and indicates a number (Channel Number, CN) of the physical cell group. The identifier may be 0 to 167 (168 in quantity). The terminal device may distinguish different cells within a coverage range of a base station by using a PCI. The information collected over the interface may include signal identifiers collected over interfaces such as a Gn interface, a Gi interface, and an EC interface. The parameter of the base station may include information such as a height of the base station, a frequency band of the base station, an azimuth of the base station, a downtilt of the base station, a longitude and a latitude of the base station, and cell transmit power of the base station.
(3) The location information of the terminal device may be location information obtained when terminal devices correspondingly receive a plurality of radio signals. For example, the location information is location information obtained by parsing data collected by the network device by using the Gn interface. Specifically, after deep packet inspection (deep packet inspection, DPI for short) parsing is performed on the data collected by using the Gn interface, a uniform resource locator (uniform resource locator, URL for short) is obtained, and then global positioning system (global positioning system, GPS for short) location information is obtained. For example, the GPS location information is obtained from a URL of an APP. However, this application is not limited to obtaining location information by using the Gn interface. For example, if an operator signs an agreement with a location service provider, location information provided by the location service provider may be directly obtained.

The terms "system" and "network" in the embodiments of this application may be used interchangeably. The term "a plurality of' means two or more. In view of this, in the embodiments of this application, "a plurality of" may be understood as "at least two". The term "at least one" may be understood as one or more, for example, one, two, or more. For example, including at least one means including one, two, or more, and the included is not limited. For example, if at least one of A, B, and C is included, the included may be A; B; C; A and B; A and C; B and C; and A, B, and C. The term "at least two" may be understood as two or more. Similarly, descriptions such as "at least one" are understood in a similar way. The term "and/or" describes an association relationship between associated objects and represents that three relationships may exist. For example, A and/or B may represent the following three cases: Only A exists, both A and B exist, and only B exists. In addition, unless otherwise specified, the character "/" generally indicates that a relationship between associated objects is "OR".

Unless otherwise stated, ordinal numbers such as "first" and "second" mentioned in the embodiments of the present application are intended to distinguish a plurality of objects, rather than limit an order, a time sequence, priorities, or importance degrees of the plurality of objects.

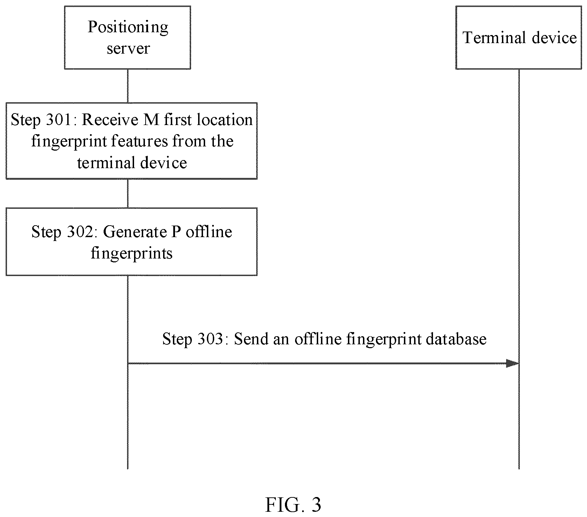

In the first phase, an embodiment of this application provides a procedure of an offline fingerprint database generation method. As shown in FIG. 3, a network device in the procedure may be the positioning server 120 in FIG. 1, and a terminal device may be the terminal device 130 in FIG. 1. It may be understood that a function of the positioning server may alternatively be implemented by using a chip applied to the positioning server, or may be implemented by using another apparatus to support the positioning server, and a function of the terminal device may alternatively be implemented by using a chip applied to the terminal device, or may be implemented by using another apparatus to support the terminal device. The procedure includes the following steps.

Step 301: The positioning server receives M location fingerprint features from the terminal device.

The M location fingerprint features include M first locations and information about a plurality of base stations in total, the plurality of base stations are M serving base stations in cells of the M first locations and N neighboring cell base stations corresponding to the M serving base stations, and the plurality of location fingerprint features include cell identities CellIDs, signal identifiers, and channel parameters of the M serving base stations, and signal identifiers and channel parameters of the N neighboring cell base stations.

Herein, the description is provided by using an example in which the positioning server receives the location fingerprint features. Certainly, in this embodiment of this application, the location fingerprint features may alternatively be received by another network device with a data processing function. This is not limited herein in this application. The positioning server may receive, at different times, location fingerprint features reported by different terminal devices, or receive, at different times, location fingerprint features reported by a same terminal device, or receive, at a same time, location fingerprint features reported by different terminal devices. The location fingerprint feature may include information such as information about a serving cell and a neighboring cell measured by, and signal strength of a signal transmitted by each of the serving cell and the neighboring cell and received by the terminal device as a reporter at a location. Therefore, the location fingerprint feature includes a first location reported by the terminal device; a signal identifier of a serving base station, a CellID of the serving base station, and a channel parameter of the serving base station that are collected by the terminal device at the first location; and signal identifiers of N neighboring cell base stations and channel parameters of the N neighboring cell base stations that are collected by the terminal device at the first location.

For example, as shown in FIG. 1, a serving base station connected to the terminal device 130 (referred to as UE1 below for simplicity) at a first location 1 (X1 Y1) is a base station A. In this case, a location fingerprint feature reported by UE1 to the positioning server may include: longitude and latitude coordinates (longitude, latitude) of a current location of UE1, a cell identity CellIDA and a channel parameter (PIA, CNA) of the serving base station A, and signal strength RSS1 of a received signal transmitted by the base station A; a channel parameter (PIB, CNB) of a neighboring cell base station B, and signal strength RSS2 of a received signal transmitted by the base station B; and a channel parameter (PIB, CNB) of a neighboring cell base station C, and signal strength RSS3 of a received signal transmitted by the base station C. In addition, location information of the first location may further include a positioning source of the first location and an ACC parameter. Reliability of the location fingerprint feature may be represented by using the positioning source of the first location, and positioning precision of the first location may be represented by using ACC. Specific content of the location fingerprint feature reported by UE1 may be shown in the following Table 1.

**Table 1**

| Location information | Location fingerprint | Positioning source of first location | Timestamp |
|---|---|---|---|
| First location 1 (X1, Y1) | (CellIDA, (PIA, CNA), RSS1), ((PIB, CNB), RSS2), ((PIC, CNC), RSS3) | GPS | 2019-7-1 10:00 |

The CellID is used to uniquely identify a base station and is globally unique. The PI is used to identify a channel of a base station, and is not globally unique but unique within a specific range. The CN is used to identify a number of a channel of a base station, and is not globally unique but unique within a certain range. In addition, the location information of the first location 1 of UE1 may be obtained by UE1 based on different positioning methods, for example, may be obtained based on GPS positioning, may be obtained through Wi-Fi positioning, or may be obtained through an online base station positioning method. Locations obtained through different positioning methods have different precision, whose error may be recorded by using ACC.

At another moment, the serving base station that UE1 may access at the first location 1 is the base station B, and the neighboring cell base stations become the base station A and the base station C. In this case, a location fingerprint feature reported by UE1 to the positioning server may be shown in the following Table 2.

**Table 2**

| Location information | Location fingerprint | Positioning source of first location | Timestamp |
|---|---|---|---|
| First location 1 (X1, Y1) | (CellIDB, (PIB, CNB), RSS2), ((PIA, CNA), RSS1), ((PIC, CNC), RSS3) | Wi-Fi | 2019-7-1 11:00 |

It can be learned from above that information included in the location fingerprint feature shown in Table 1 and the location fingerprint feature shown in Table 2 is redundant, and the following information is recorded twice in Table 1 and Table 2: the signal strength of the base station CellIDA obtained by UE1 at the first location 1 is RSS1, the signal strength of the base station CellIDB obtained by UE1 at the first location 1 is RSS2, and the signal strength of the base station CellIDC obtained by UE1 at the first location 1 is RSS3.

When the location of UE1 changes to a first location 2 (X2, Y2), the serving base station that UE1 may access is the base station A, and the neighboring cell base station is the base station B. In this case, a location fingerprint feature reported by UE1 to the positioning server may be shown in the following Table 3.

**Table 3**

| Location information | Location fingerprint | Positioning source of first location | Timestamp |
|---|---|---|---|
| First location 2 (X2, Y2) | (CellIDA, (PIA, CNA), RSS4), ((PIB, CNB), RSS5) | Wi-Fi | 2019-7-2 10:00 |

When UE1 moves to a first location 3 (X3, Y3), the serving base station that may be accessed is the base station B, and the neighboring cell base station is the base station A. In this case, a location fingerprint feature reported by UE1 to the positioning server may be shown in the following Table 4.

**Table 4**

| Location information | Location fingerprint | Positioning source of first location | Timestamp |
|---|---|---|---|
| First location 3 | (CellIDB, (PIB, CNB), RSS7), | Wi-Fi | 2019-7-2 11:00 |
| (X3, Y3) | ((PIA, CNA), RSS8) | | |

When UE1 moves to a first location 4 (X4, Y4), the serving base station that may be accessed is the base station C, and the neighboring cell base station is the base station A. In this case, a location fingerprint feature reported by UE1 to the positioning server may be shown in the following Table 5.

**Table 5**

| Location information | Location fingerprint | Positioning source of first location | Timestamp |
|---|---|---|---|
| First location 4 (X4, Y4) | (CellIDC, (PIC, CNC), RSS9), ((PIA, CNA), RSS10) | Base station positioning | 2019-7-3 11:00 |

For another example, UE1 is at a first location 5 (X5, Y5) beyond signal coverage ranges of the base station A and the base station C, the serving base station that may be accessed is a base station F, and the neighboring cell base station is a base station D. In this case, a location fingerprint feature reported by UE1 to the positioning server may be shown in the following Table 6.

**Table 6**

| Location information | Location fingerprint | Positioning source of first location | Timestamp |
|---|---|---|---|
| First location 5 (X5, Y5) | (CellIDF, (PIF, CNF), RSS11), ((PIC, CNC), RSS12) | Base station positioning | 2019-7-3 11:00 |

For another example, UE1 is at a first location 6 (X6, Y6) beyond signal coverage ranges of the base station A and the base station C, the serving base station that may be accessed is the base station D, and the neighboring cell base station is the base station F. In this case, a location fingerprint feature reported by UE1 to the positioning server may be shown in the following Table 6_1.

**Table 6_1**

| Location information | Location fingerprint | Positioning source of first location | Timestamp |
|---|---|---|---|
| First location 6 (X6, Y6) | (CellIDD, (PIC, CNC), RSS13), ((PIF, CNF), RSS14) | GPS | 2019-8-3 11:00 |

In conclusion, when the location of the terminal device changes, the serving base station accessed by the terminal device changes, or the neighboring cell base station of the terminal device changes, a new location fingerprint feature is generated and reported to the positioning server. The positioning server may summarize, to a corresponding coordinate location based on the first location (that is, coordinate location information of UE) corresponding to the location fingerprint feature reported by the terminal device, a plurality of location fingerprint features reported by different UEs. In addition, to make a subsequently learned location fingerprint database more pertinent and further reduce an amount of data included in the location fingerprint database, different geographical ranges may be obtained through division in this application, to obtain location fingerprint databases for different geographical ranges. For example, the division may be performed based on different urban areas. For example, in Shanghai, different location fingerprint databases may be learned correspondingly for different urban areas such as Pudong New District, Jiading District, Huangpu District, Jinshan District, Xuhui District, Jing'an District, and Yangpu District.

With reference to the foregoing example, if it is determined that the first location 1, the first location 2, the first location 3, the first location 4, and the first location 5 are all within a same geographical range, the location fingerprint features in Table 1 to Table 6_1 may be stored in a same location fingerprint database. In this case, the obtained location fingerprint database may be shown in the following Table 7.

**Table 7**

| Row number | Location information | Location fingerprint | Positioning source of first location | Timestamp |
|---|---|---|---|---|
| 1 | First location 1 (X1, Y1) | (CellIDA, (PIA, CNA), RSS1), ((PIB, CNB), RSS2), ((PIC, CNC), RSS3) | GPS | 2019-7-1 10:00 |
| 2 | First location 1 (X1, Y1) | (CellIDB, (PIB, CNB), RSS2), ((PIA, CNA), RSS1), ((PIC, CNC), RSS3) | GPS | 2019-7-1 11:00 |
| 3 | First location 2 | (CellIDA, (PIA, CNA), RSS4), | Wi-Fi | 2019-7-2 10:00 |
| | (X2, Y2) | ((PIB, CNB), RSS5) | | |
| 4 | First location 3 (X3, Y3) | (CellIDB, (PIB, CNB), RSS7), ((PIA, CNA), RSS8) | Wi-Fi | 2019-7-2 11:00 |
| 5 | First location 4 (X4, Y4) | (CellIDC, (PIC, CNC), RSS9), ((PIA, CNA), RSS10) | Base station positioning | 2019-7-3 11:00 |
| 6 | First location 5 (X5, Y5) | (CellIDF, (PIF, CNF), RSS11), ((PIC, CNC), RSS12) | Base station positioning | 2019-7-3 11:00 |
| 7 | First location 6 (X6, Y6) | (CellIDD, (PIC, CNC), RSS13), ((PIF, CNF), RSS14) | GPS | 2019-8-3 11:00 |

Step 302: The positioning server matches the CellIDs of the M serving base stations with the signal identifiers and the channel parameters in the information about the plurality of base stations, to generate P offline fingerprints.

P is greater than M. P is a positive integer. The plurality of offline fingerprints are stored in an offline fingerprint database of the positioning server. Each offline fingerprint includes a CellID, a signal identifier, and a channel parameter that are of a base station, and a reference point location.

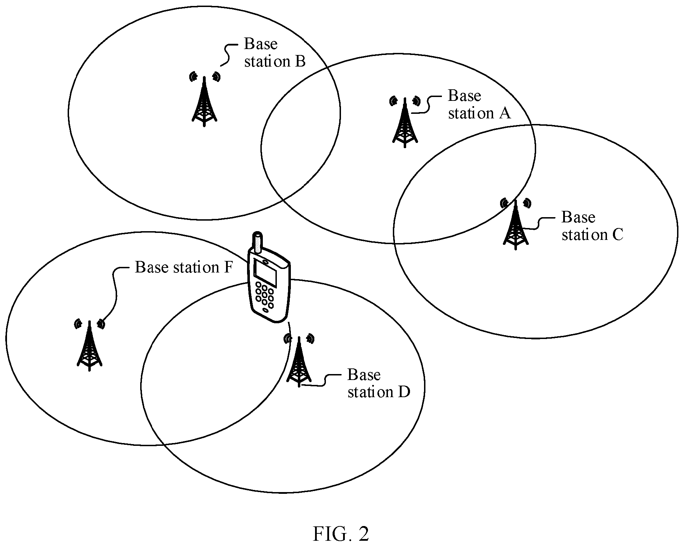

In a possible scenario, as shown in FIG. 2, because the base station D and the base station F are located beyond a signal coverage range of the base station A, a channel parameter of the base station D may be set to be the same as a channel parameter of the base station C. Therefore, the positioning server cannot directly find a corresponding base station based only on a channel parameter of a neighboring cell base station, making it difficult to fully use information in a location fingerprint feature in a location fingerprint database. In a positioning process, a complete location fingerprint feature needs to be matched against a target location fingerprint, leading to a large amount of redundant information in the location fingerprint database. In addition, because a channel parameter in neighboring cell base station information is not a globally unique identifier, a corresponding base station cannot be directly determined based on the channel parameter during positioning. As a result, the neighboring cell base station information cannot be directly integrated with serving base station information in the location fingerprint feature.

For example, the positioning server may find, in Table 7 by searching for CellIDA, location fingerprint features related to CellIDA, including two location fingerprint features corresponding to the row 1 and the row 3 of Table 7. However, there are two pieces of neighboring cell base station information in the row 1 of Table 7, while there is one piece of neighboring cell base station information in the row 3 of Table 7. Therefore, the two location fingerprint features corresponding to the row 1 and the row 3 cannot be directly integrated.

In addition, in Table 7, the row 2, the row 4, and the row 5 actually also include information related to CellIDA, and the information exists in a form of neighboring cell base station information. Because a channel parameter of a neighboring cell base station is not a globally unique identifier (for example, as shown in FIG. 2, (PIC, CNC) in the row 6 of Table 7 actually corresponds to the base station D), during positioning, a CellID of the neighboring cell base station cannot be directly determined based on the channel parameter. In other words, the positioning server cannot directly find neighboring cell base station information based on the cell identity CellIDA. Therefore, the information related to CellIDA in the row 2, the row 4, and the row 5 cannot be directly integrated.

It should be noted that in the M location fingerprint features obtained by the positioning server, the M serving base stations overlap with the N neighboring cell base stations. To be specific, in different location fingerprint features, a same base station may be a serving base station, or may be a neighboring cell base station. For example, in the location fingerprint features in Table 7, using the base station A as an example, in the location fingerprint feature in the row 1, the base station A is a serving base station, while in the location fingerprint feature in the row 4, the base station A is a neighboring cell base station. Therefore, based on the M serving base stations in the M location fingerprint features, CellIDs of the N neighboring cell base stations corresponding to the M serving base stations can be found. Based on this, in this embodiment of this application, first, the location fingerprint feature may be split into serving base station information and neighboring cell base station information, and a CellID of a neighboring cell base station is supplemented in the neighboring cell base station information by searching for the CellID corresponding to the neighboring cell base station, to resolve problems that the neighboring cell base station information in the location fingerprint feature cannot be directly used for positioning, and location fingerprint features cannot be directly integrated, resulting in a large amount of redundant information in the location fingerprint database. A specific process may be as follows:

Step 3021: The positioning server may match CellIDs of serving base stations in a plurality of location fingerprint features that meet a second condition with the channel parameters of the N neighboring cell base stations corresponding to the M serving base stations, to determine the CellIDs of the N neighboring cell base stations corresponding to the M serving base stations. M and N are positive integers.

The second condition is that a channel standard of a serving base station carried in a location fingerprint feature is the same as a channel standard of a serving base station carried in a location fingerprint feature corresponding to the neighboring cell base stations, and a first location carried in the location fingerprint feature is within a second neighboring cell search range. The second neighboring cell search range is a limited area including a first location in the location fingerprint feature corresponding to the neighboring cell base stations.

First, the positioning server may first divide a location fingerprint feature into serving base station information and N pieces of neighboring cell base station information.

The serving base station information includes a first location reported by the terminal device, and a signal identifier of a serving base station, a CellID of the serving base station, and a channel parameter of the serving base station that are collected by the terminal device at the first location. The neighboring cell base station information includes: a signal identifier of a neighboring cell base station and a channel parameter of the neighboring cell base station that are collected by the terminal device at the first location. The neighboring cell base station information includes: the first location reported by the terminal device, and a signal identifier of a neighboring cell base station and a channel parameter of the neighboring cell base station that are collected by the terminal device at the first location.

The following uses Table 7 as an example to describe a process of splitting the seven location fingerprint features in Table 7. For example, the location fingerprint feature in the row 1 of Table 7 includes one piece of serving base station information and two pieces of neighboring cell base station information (the row 2 and the row 3 of Table 8). The row 1 of Table 7 may be split as shown in the following Table 8.

**Table 8**

| Row number | Location information | Location fingerprint | Positioning source of first location | Timestamp |
|---|---|---|---|---|
| 1 | First location 1 (X1, Y1) | CellIDA, (PIA, CNA), RSS1 | GPS | 2019-7-2 10:00 |
| 2 | First location 1 (X1, Y1) | (PIB, CNB), RSS2 | GPS | 2019-7-2 10:00 |
| 3 | First location 1 (X1, Y1) | (PIC, CNC), RSS3 | GPS | 2019-7-2 10:00 |

Similarly, the positioning server may split the location fingerprint feature in the row 2 of Table 7 into one piece of serving base station information (as shown in the row 1 of Table 9) and two pieces of neighboring cell base station information (as shown in the row 2 and the row 3 of Table 9), as shown in the following Table 9.

**Table 9**

| Row number | Location information | Location fingerprint | Positioning source of first location | Timestamp |
|---|---|---|---|---|
| 1 | First location 1 (X1, Y1) | CellIDB, (PIB, CNB), RSS2 | Wi-Fi | 2019-7-2 10:00 |
| 2 | First location 1 | (PIA, CNA), RSS1 | Wi-Fi | 2019-7-2 10:00 |
| 3 | First location 1 | (PIC, CNC), RSS3 | Wi-Fi | 2019-7-2 10:00 |

Similarly, the positioning server may split the location fingerprint feature in the row 3 of Table 7 into one piece of serving base station information (as shown in the row 1 of Table 10) and one piece of neighboring cell base station information (as shown in the row 2 of Table 10), as shown in the following Table 10.

**Table 10**

| Row number | Location information | Location fingerprint | Positioning source of first location | Timestamp |
|---|---|---|---|---|
| 1 | First location 2 (X2, Y2) | CellIDA, (PIA, CNA), RSS4 | Wi-Fi | 2019-7-2 10:00 |
| 2 | First location 2 (X2, Y2) | (PIB, CNB), RSS5 | Wi-Fi | 2019-7-2 10:00 |

Similarly, the positioning server may split the location fingerprint feature in the row 4 of Table 7 into one piece of serving base station information (as shown in the row 1 of Table 11) and one piece of neighboring cell base station information (as shown in the row 2 of Table 11), as shown in the following Table 11.

**Table 11**

| Row number | Location information | Location fingerprint | Positioning source of first location | Timestamp |
|---|---|---|---|---|
| 1 | First location 3 (X3, Y3) | CellIDB, (PIB, CNB), RSS7 | Wi-Fi | 2019-7-2 11:00 |
| 2 | First location 3 (X3, Y3) | (PIA, CNA), RSS8 | Wi-Fi | 2019-7-2 11:00 |

Similarly, the positioning server may split the location fingerprint feature in the row 5 of Table 7 into one piece of serving base station information (as shown in the row 1 of Table 12) and one piece of neighboring cell base station information (as shown in the row 2 of Table 12), as shown in the following Table 12.

**Table 12**

| Row number | Location information | Location fingerprint | Positioning source of first location | Timestamp |
|---|---|---|---|---|
| 1 | First location 4 (X4, Y4) | CellIDC, (PIC, CNC), RSS9 | Base station positioning | 2019-7-3 11:00 |
| 2 | First location 4 (X4, Y4) | (PIA, CNA), RSS10 | Base station positioning | 2019-7-3 11:00 |

Similarly, the positioning server may split the location fingerprint feature in the row 6 of Table 7 into one piece of serving base station information (as shown in the row 1 of Table 13) and one piece of neighboring cell base station information (as shown in the row 2 of Table 13), as shown in the following Table 13.

**Table 13**

| Row number | Location information | Location fingerprint | Positioning source of first location | Timestamp |
|---|---|---|---|---|
| 1 | First location 5 (X5, Y5) | CellIDF, (PIF, CNF), RSS11 | Base station positioning | 2019-7-3 11:00 |
| 2 | First location 5 (X5, Y5) | (PIC, CNC), RSS12 | Base station positioning | 2019-7-3 11:00 |

Similarly, the positioning server may split the location fingerprint feature in the row 6 of Table 7 into one piece of serving base station information (as shown in the row 1 of Table 14) and one piece of neighboring cell base station information (as shown in the row 2 of Table 14), as shown in the following Table 14.

**Table 14**

| Row number | Location information | Location fingerprint | Positioning source of first location | Timestamp |
|---|---|---|---|---|
| 1 | First location 6 (X6, Y6) | (CellIDD, (PIC, CNC), RSS13) | GPS | 2019-8-3 11:00 |
| 2 | First location 6 (X6, Y6) | ((PIF, CNF), RSS14) | GPS | 2019-8-3 11:00 |

Then, the positioning server may generate mapped serving base station information based on the neighboring cell base station information and a CellID of a neighboring cell base station corresponding to the neighboring cell base station information. The following provides a description by using an example in which CellIDs of neighboring cell base stations in the location fingerprint feature in Table 8 are to be supplemented. For a method for supplementing CellIDs of neighboring cell base stations in other location fingerprint features, refer to this embodiment. Details are not described herein again. A specific implementation process may include as follows:

First, the positioning server may determine, based on a first location in a location fingerprint feature and a serving base station in the location fingerprint feature, a second neighboring cell base station search range corresponding to the location fingerprint feature.

For example, the location fingerprint feature is the location fingerprint feature in Table 8. First serving base station information is the serving base station information in the row 1 of Table 8. The location fingerprint feature includes two pieces of second neighboring cell base station information corresponding to the row 2 and the row 3 of Table 8.

Base stations with different signal standards have different signal coverage ranges. For example, a signal coverage radius of a 2G standard is 20 km, a signal coverage radius of a 3G standard is 5 km, and a signal coverage radius of a 4G standard is 3 km. In a signal coverage range of a base station, channel parameters of a serving base station and a neighboring cell base station may basically each correspond to only one base station. Therefore, a second neighboring cell base station search range corresponding to each location fingerprint feature may be obtained through division based on a first location in the location fingerprint feature and the signal coverage range of the base station. In a possible implementation, the second neighboring cell search range is an area determined by the positioning server by using the first location in the location fingerprint feature corresponding to the neighboring cell base stations as a center and based on a signal coverage range determined by a signal standard corresponding to the serving base station in the location fingerprint feature corresponding to the neighboring cell base stations. Certainly, a radius of the second neighboring cell base station search range may alternatively be determined in another manner, which is not limited herein.

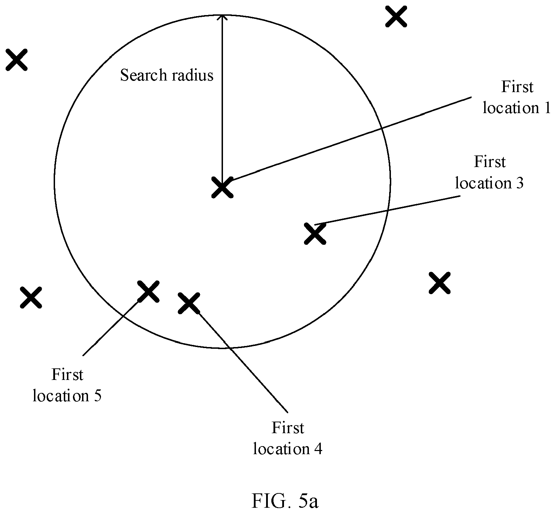

For example, the CellIDs of the neighboring cell base stations in Table 8 are to be supplemented. As shown in FIG. 5a, a first location corresponding to Table 8 is the first location 1. Therefore, a circular area formed by using the first location 1 as a center and using a distance (for example, 3 km) corresponding to a signal coverage range of the serving base station A as a radius may be used as a second neighboring cell base station search range corresponding to the first serving base station information corresponding to Table 8.

Then, the positioning server may determine, based on the first location in the location fingerprint feature, N_0 pieces of second serving base station information located within the second neighboring cell base station search range. A signal standard of a serving base station corresponding to the second serving base station information is the same as a signal standard corresponding to a serving base station in the first serving base station information.

In a possible implementation, the second neighboring cell base station search range may be first searched for serving base station information whose location meets the second neighboring cell base station search range, and then second serving base station information whose signal standard is the same as the signal standard corresponding to the serving base station in the first serving base station information is filtered out based on the signal standard.

With reference to the foregoing example, the plurality of first locations included in Table 8 to Table 14 are searched for a first location within the determined second neighboring cell base station search range. For example, the second neighboring cell base station search range shown in FIG. 5a includes the first location 1, the first location 3, the first location 4, and the first location 5 in Table 8 to Table 13. According to Table 9, it is determined that a serving base station corresponding to the first location 1 is the base station B. According to Table 12, it is determined that a serving base station corresponding to the first location 3 is the base station A. According to Table 13, it is determined that a serving base station corresponding to the first location 4 is the base station C. According to Table 13, it is determined that a serving base station corresponding to the first location 5 is the base station F. Assuming that signal standards of the base station B, the base station C, and the base station F are the same as a signal standard of the base station A, the base station B, the base station C, and the base station F are used as possible neighboring cell base stations corresponding to Table 8. In other words, four pieces of determined second serving base station information include: the serving base station information corresponding to Table 9, the serving base station information corresponding to Table 11, the serving base station information corresponding to Table 12, and the serving base station information corresponding to Table 13.

Next, the positioning server determines, based on channel parameters in the N_0 pieces of second serving base station information, N_1 pieces of second serving base station information that match the N pieces of second neighboring cell base station information. With reference to the foregoing example, it may be determined that second serving base station information matching the second neighboring cell base station information in the row 2 in Table 8 is the serving base station information corresponding to Table 9, and second serving base station information matching the second neighboring cell base station information in the row 3 in Table 8 is the serving base station information corresponding to Table 9.

Then, the positioning server may determine CellIDs of neighboring cell base stations in the N pieces of neighboring cell base station information in the location fingerprint feature based on CellIDs in the N_1 pieces of matched second serving base station information. With reference to the foregoing example, a correspondence between the CellID of the base station B and the channel parameter (PIB, CNB) may be determined based on Table 9, and a correspondence between the CellID of the base station C and the channel parameter (PIC, CNC) may be determined based on Table 12. Therefore, based on the correspondences, a CellID of a neighboring cell base station in each piece of neighboring cell base station information in Table 8 may be supplemented to generate mapped serving base station information. In this case, the mapped serving base station information may be used as a complete offline fingerprint, for the terminal device to perform offline positioning. Mapped serving base station information generated after Table 8 is supplemented may be shown in Table 15.

**Table 15**

| Row number | Location information | Location fingerprint feature | Positioning source of first location | Timestamp |
|---|---|---|---|---|
| 1 | First location 1 (X1, Y1) | CellIDA, (PIA, CNA), RSS1 | GPS | 2019-7-2 10:00 |
| 2 | First location 1 (X1, Y1) | CellIDB, (PIB, CNB), RSS2 | GPS | 2019-7-2 10:00 |
| 3 | First location 1 (X1, Y1) | CellIDC, (PIC, CNC), RSS3 | GPS | 2019-7-2 10:00 |

For example, because the second neighboring cell base station search range is determined by using the first location as a center, rather than determined based on a location of the base station A, it is possible that a channel parameter of a neighboring cell base station does not uniquely correspond to one base station within the second neighboring cell base station search range.

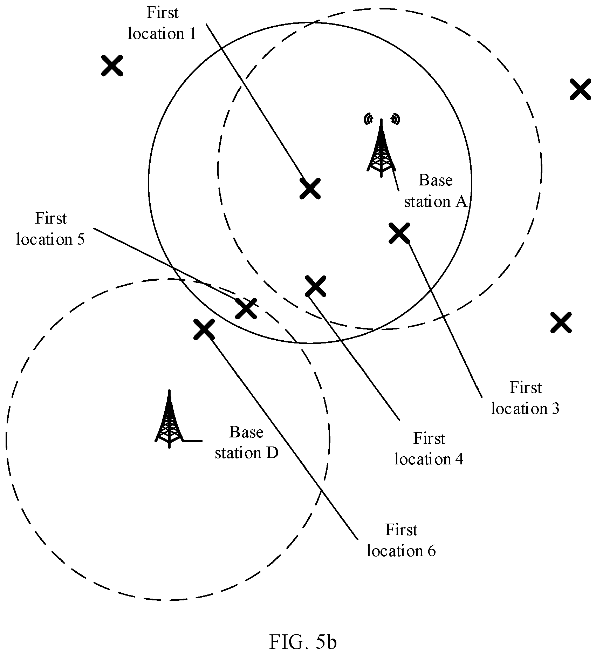

For example, as shown in FIG. 5b, a second neighboring cell base station search range corresponding to Table 8 is a solid-line area, which is determined based on the coverage range of the base station A by using the first location 1 as a center. A dashed-line area determined based on the coverage range of the base station A by using the location of the base station A as a center does not overlap with the solid-line area. In this case, a cell (a dashed-line area of the base station D) of the base station D overlaps with the solid-line area. As a result, UE1 measures the signal strength of the base station D at the first location 5. In Table 12 and Table 14, the channel parameter (PIC, CNC) corresponds to CellIDs of the base station D and the base station C. It is assumed that a channel parameter of third neighboring cell base station information is (PIC, CNC), which corresponds to K0 pieces of fourth serving base station information, and CellIDs corresponding to the fourth serving base station information are CellIDC and CellIDD. In this case, two pieces of fourth serving base station information corresponding to neighboring cell base station information in Table 12 and Table 14 may be shown in Table 16.

**Table 16**

| | | | |
|---|---|---|---|
| First location 4 (X4, Y4) | CellIDC, (PIC, CNC), RSS9 | Wi-Fi | 2019-7-3 11:00 |
| First location 6 (X5, Y5) | CellIDD, (PIC, CNC), RSS9 | GPS | 2019-8-3 11:00 |

Therefore, based on the foregoing problem, this application proposes a method for resolving the foregoing problem. For example, a channel parameter of a first neighboring cell base station corresponds to CellIDs of K0 serving base stations meeting the second condition. The first neighboring cell base station is one of the N neighboring cell base stations. A specific process may be as follows: The positioning server determines a center of K0 first locations based on the K0 first locations. For example, a center location may be determined based on K0 first locations in K0 location fingerprint features that meet the second condition. The center location may be an average location of the K0 first locations, or may be a center-of-mass location determined after weighting based on signal strength. K0 is a positive integer.

Then, the positioning server determines, based on the center and Euclidean distances between the center and the K0 first locations, a CellID of a serving base station that matches the channel parameter of the first neighboring cell base station, where the CellID of the serving base station that matches the channel parameter of the first neighboring cell base station is a CellID of a serving base station corresponding to a first location closest to the center.

Specifically, a base station most likely corresponding to the channel parameter may be determined by using a maximum likelihood function algorithm. The positioning server may use the K0 first locations as parameters of a likelihood function. The positioning server determines the likelihood function based on the center-of-mass location and the parameters of the likelihood function. The positioning server uses a CellID of a serving base station that is in the location fingerprint features that meet the second condition and that corresponds to a maximum value of the likelihood function as a CellID of a serving base station that matches the channel parameter of the first neighboring cell base station.

With reference to the foregoing example, in this case, the first location 4 and the first location 5 that correspond to the fourth serving base station information in Table 16 may be used as parameters of the likelihood function, and a center-of-mass location is determined by using the first location 1, the first location 4, and the first location 5. A reciprocal of a Euclidean distance between the center-of-mass location and a parameter (the first position 4 or the first position 5) of the likelihood function is used as the likelihood function. Whether the corresponding parameter is the first location 4 or the first location 5 is determined when the maximum value of the likelihood function is determined. For example, assuming that the likelihood function is maximum at the first location 4, CellIDC corresponding to the first location 4 is used as a cell identity of the channel parameter (PIC, CNC).

Similarly, CellIDs of neighboring cell base stations in Table 9 to Table 14 may be further supplemented based on the foregoing method. After the CellIDs of the neighboring cell base stations are supplemented based on Table 7, mapped serving base station information corresponding to Table 9 to Table 14 may be obtained, as shown in the following Table 17.

**Table 17**

| | | | | | |
|---|---|---|---|---|---|
| 1 | Row 1 of original Table 8 | First location 1 (X1, Y1) | CellIDA, (PIA, CNA), RSS1 | GPS | 2019-7-2 10:00 |
| 2 | Row 2 of original Table 8 | First location 1 (X1, Y1) | CellIDB, (PIB, CNB), RSS2 | GPS | 2019-7-2 10:00 |
| 3 | Row 3 of original Table 8 | First location 1 (X1, Y1) | CellIDC, (PIC, CNC), RSS3 | GPS | 2019-7-2 10:00 |
| 4 | Row 1 of original Table 10 | First location 2 (X2, Y2) | CellIDA, (PIA, CNA), RSS4 | Wi-Fi | 2019-7-2 10:00 |
| 5 | Row 2 of original Table 10 | First location 2 (X2, Y2) | CellIDB, (PIB, CNB), RSS5 | Wi-Fi | 2019-7-2 10:00 |
| 6 | Row 1 of original Table 11 | First location 3 (X3, Y3) | CellIDB, (PIB, CNB), RSS7 | Wi-Fi | 2019-7-2 11:00 |
| 7 | Row 2 of original Table 11 | First location 3 (X3, Y3) | CellIDA, (PIA, CNA), RSS8 | Wi-Fi | 2019-7-2 11:00 |
| 8 | Row 1 of original Table 12 | First location 4 (X4, Y4) | CellIDC, (PIC, CNC), RSS9 | Base station positioning | 2019-7-3 11:00 |
| 9 | Row 2 of original Table 12 | First location 4 (X4, Y4) | CellIDA, (PIA, CNA), RSS10 | Base station positioning | 2019-7-3 11:00 |
| 10 | Row 1 of original Table 13 | First location 5 (X5, Y5) | CellIDF, (PIF, CNF), RSS11 | Base station positioning | 2019-7-3 11:00 |
| 11 | Row 2 of original Table 13 | First location 5 (X5, Y5) | CellIDD, (PIC, CNC), RSS12 | Base station positioning | 2019-7-3 11:00 |
| 12 | Row 1 of original Table 14 | First location 6 (X6, Y6) | CellIDD, (PIC, CNC), RSS13 | GPS | 2019-8-3 11:00 |
| 13 | Row 2 of original Table 14 | First location 6 (X6, Y6) | CellIDF, (PIF, CNF), RSS14 | GPS | 2019-8-3 11:00 |

Step 3022: The positioning server generates the P offline fingerprints based on the M location fingerprint features and the CellIDs of the N neighboring cell base stations corresponding to the M serving base stations.

In a possible implementation, the positioning server may generate M offline fingerprints based on the M first locations and information about the M serving base stations; and generate M×N offline fingerprints based on the M first locations, information about the N neighboring cell base stations corresponding to the M serving base stations, and the CellIDs of the N neighboring cell base stations corresponding to the M serving base stations. Therefore, the P offline fingerprints generated based on the M location fingerprint features and the CellIDs of the N neighboring cell base stations corresponding to the M serving base stations are M×(N+1) offline fingerprints.

In a possible design, the positioning server may use serving base station information in a location fingerprint feature as an offline fingerprint. For example, four offline fingerprints may be generated correspondingly based on serving base station information (in the rows 1, 4, 6, and 8) of CellIDA in Table 17. For example, one offline fingerprint may be generated based on the serving base station information in the row 1 in Table 17. In this case, a first location in the serving base station information corresponding to the row 1 in Table 17 is the first location 1, and may be used as a reference point location in the offline fingerprint, and RSS1 in the serving base station information corresponding to the row 1 in Table 17 may be used as a signal identifier of a base station in the offline fingerprint.

The seven location fingerprint features in Table 7 are used as an example. In this case, serving base station information corresponding to each row in Table 17 may be used as an offline fingerprint, and a generated offline fingerprint database may be shown in Table 18_1.

**Table 18_1**

| Row number | Location information | Location fingerprint | Positioning source of reference point location | Timestamp |
|---|---|---|---|---|
| 1 | Reference point location 1 (X1, Y1) | (CellIDA, (PIA, CNA), RSS1) | GPS | 2019-7-1 10:00 |
| 2 | Reference point location 1 (X1, Y1) | (CellIDB, (PIB, CNB), RSS2) | GPS | 2019-7-1 11:00 |
| 3 | Reference point location 2 (X2, Y2) | (CellIDA, (PIA, CNA), RSS4) | Wi-Fi | 2019-7-2 10:00 |
| 4 | Reference point location 3 (X3, Y3) | (CellIDB, (PIB, CNB), RSS7) | Wi-Fi | 2019-7-2 11:00 |
| 5 | Reference point location 4 (X4, Y4) | (CellIDC, (PIC, CNC), RSS9) | Base station positioning | 2019-7-3 11:00 |
| 6 | Reference point location 5 (X5, Y5) | (CellIDF, (PIF, CNF), RSS11) | Base station positioning | 2019-7-3 11:00 |
| 7 | Reference point location 6 (X6, Y6) | (CellIDD, (PIC, CNC), RSS13) | GPS | 2019-8-3 11:00 |

Compared with a location fingerprint in an existing technology, in this embodiment, redundant information in the location fingerprint can be effectively compressed, to reduce a size of the offline fingerprint database, for the terminal device to locally store the offline fingerprint database, and perform offline positioning locally.

In another possible design, the positioning server uses a first location in mapped serving base station information as a reference point location in an offline fingerprint. The mapped serving base station information is any one piece of serving base station information corresponding to a CellID of the base station. The positioning server determines a signal identifier in the mapped serving base station information as a signal identifier of the base station corresponding to the reference point location.

For example, two offline fingerprints may be generated correspondingly based on mapped serving base station information (in the rows 7 and 9) of CellIDA in Table 17. For example, one offline fingerprint may be generated based on the mapped serving base station information in the row 7 in Table 17. In this case, a first location in the mapped serving base station information corresponding to the row 7 in Table 17 is a position of a reference point 3, and may be used as a reference point location in the offline fingerprint, and RSS8 in the mapped serving base station information corresponding to the row 7 in Table 17 may be used as a signal identifier of a base station in the offline fingerprint. Then, an offline fingerprint database that may be generated based on Table 17 may be shown in Table 18_2.

**Table 18_2**

| | | | | | |
|---|---|---|---|---|---|
| 1 | Row 2 of original Table 8 | Reference point location 1 (X1, Y1) | CellIDB, (PIB, CNB), RSS2 | GPS | 2019-7-2 10:00 |
| 2 | Row 3 of original Table 8 | Reference point location 1 (X1, Y1) | CellIDC, (PIC, CNC), RSS3 | GPS | 2019-7-2 10:00 |
| 3 | Row 2 of original Table 10 | Reference point location 2 (X2, Y2) | CellIDB, (PIB, CNB), RSS5 | Wi-Fi | 2019-7-2 10:00 |
| 4 | Row 2 of original Table 11 | Reference point location 3 (X3, Y3) | CellIDA, (PIA, CNA), RSS8 | Wi-Fi | 2019-7-2 11:00 |
| 5 | Row 2 of original Table 12 | Reference point location 4 (X4, Y4) | CellIDA, (PIA, CNA), RSS10 | Base station positioning | 2019-7-3 11:00 |
| 6 | Row 2 of original Table 13 | Reference point location 5 (X5, Y5) | CellIDD, (PIC, CNC), RSS12 | Base station positioning | 2019-7-3 11:00 |
| 7 | Row 2 of original Table 14 | Reference point location 6 (X6, Y6) | CellIDF, (PIF, CNF), RSS14 | GPS | 2019-8-3 11:00 |

Certainly, both the serving base station information and the mapped serving base station information may be used as offline fingerprints in an offline fingerprint database. With reference to the foregoing examples, the offline fingerprint database may be shown in Table 18_3.

**Table 18_3**

| | | | | | |
|---|---|---|---|---|---|
| 1 | Row 1 of original Table 8 | Reference point location 1 (X1, Y1) | CellIDA, (PIA, CNA), RSS1 | GPS | 2019-7-2 10:00 |
| 2 | Row 2 of original Table 8 | Reference point location 1 (X1, Y1) | CellIDB, (PIB, CNB), RSS2 | GPS | 2019-7-2 10:00 |
| 3 | Row 3 of original Table 8 | Reference point location 1 (X1, Y1) | CellIDC, (PIC, CNC), RSS3 | GPS | 2019-7-2 10:00 |
| 4 | Row 1 of original Table 10 | Reference point location 2 (X2, Y2) | CellIDA, (PIA, CNA), RSS4 | Wi-Fi | 2019-7-2 10:00 |
| 5 | Row 2 of original Table 10 | Reference point location 2 (X2, Y2) | CellIDB, (PIB, CNB), RSS5 | Wi-Fi | 2019-7-2 10:00 |
| 6 | Row 1 of original Table 11 | Reference point location 3 (X3, Y3) | CellIDB, (PIB, CNB), RSS7 | Wi-Fi | 2019-7-2 11:00 |
| 7 | Row 2 of original Table 11 | Reference point location 3 (X3, Y3) | CellIDA, (PIA, CNA), RSS8 | Wi-Fi | 2019-7-2 11:00 |
| 8 | Row 1 of original Table 12 | Reference point location 4 (X4, Y4) | CellIDC, (PIC, CNC), RSS9 | Base station positioning | 2019-7-3 11:00 |
| 9 | Row 2 of original Table 12 | Reference point location 4 (X4, Y4) | CellIDA, (PIA, CNA), RSS10 | Base station positioning | 2019-7-3 11:00 |
| 10 | Row 1 of original Table 13 | Reference point location 5 (X5, Y5) | CellIDF, (PIF, CNF), RSS11 | Base station positioning | 2019-7-3 11:00 |
| 11 | Row 2 of original Table 13 | Reference point location 5 (X5, Y5) | CellIDD, (PIC, CNC), RSS12 | Base station positioning | 2019-7-3 11:00 |
| 12 | Row 1 of original Table 14 | Reference point location 6 (X6, Y6) | CellIDD, (PIC, CNC), RSS13 | GPS | 2019-8-3 11:00 |
| 13 | Row 2 of original Table 14 | Reference point location 6 (X6, Y6) | CellIDF, (PIF, CNF), RSS14 | GPS | 2019-8-3 11:00 |

Further, to improve reliability of positioning precision, positioning source filtering may be performed on the offline fingerprints by using positioning sources of the first locations included in the location fingerprint features. Specifically, a process may include as follows: The positioning server determines positioning source priorities of the first locations of the location fingerprint features based on the positioning sources of the first locations of the location fingerprint features. Then, the positioning server determines positioning source priorities of reference point locations in corresponding offline fingerprints based on the positioning source priorities of the first locations of the location fingerprint features. Next, the positioning server filters the offline fingerprints based on the positioning source priorities of the reference point locations in the offline fingerprints. The positioning server uses the filtered offline fingerprints as offline fingerprints in the offline fingerprint database.

For example, if it is determined that a descending order of the positioning source priorities of the first locations in the location fingerprint features is: GPS positioning, Wi-Fi positioning, and online base station positioning, a descending order of the positioning source priorities of the reference point locations in the corresponding offline fingerprints is GPS positioning, Wi-Fi positioning, and online base station positioning. Then, the offline fingerprints may be filtered based on the positioning source priorities of the reference point locations in the offline fingerprints. For example, if it is determined that an offline fingerprint with a high priority exists, and a quantity of offline fingerprints based on a same location or based on a same base station exceeds a preset threshold, a location fingerprint feature with a low priority is deleted. For example, if offline fingerprints of CellIDA based on the reference point location 1 include offline fingerprints of GPS positioning and Wi-Fi positioning, the offline fingerprint of Wi-Fi positioning is deleted. Similarly, a corresponding offline fingerprint of Wi-Fi positioning in offline fingerprints based on CellIDB may be deleted. An offline fingerprint database generated by the filtered offline fingerprints may be shown in the following Table 19.

**Table 19**

| Row number | Location information | Location fingerprint | Positioning source | Timestamp |
|---|---|---|---|---|
| 1 | Reference point location 1 (X1, Y1) | (CellIDA, (PIA, CNA), RSS1) | GPS | 2019-7-1 10:00 |
| 2 | Reference point location 1 (X1, Y1) | (CellIDB, (PIB, CNB), RSS2) | GPS | 2019-7-1 11:00 |
| 3 | Reference point location 4 (X4, Y4) | (CellIDC, (PIC, CNC), RSS9) | GPS | 2019-7-3 11:00 |
| 4 | Reference point location 5 (X5, Y5) | (CellIDF, (PIF, CNF), RSS11) | GPS | 2019-7-3 11:00 |
| 5 | Reference point location 6 (X6, Y6) | (CellIDD, (PIC, CNC), RSS13) | GPS | 2019-8-3 11:00 |

In another possible filtering manner, the location fingerprint features further include positioning error parameters ACC corresponding to the location information. Therefore, the positioning server may alternatively filter the offline fingerprints based on the positioning sources and ACC in the location fingerprint features. Priorities of the offline fingerprints corresponding to the location fingerprint features are jointly determined based on the positioning sources and errors, to filter the offline fingerprints, so that reliability of the offline fingerprint database generated by the filtered offline fingerprints is improved.

Specifically, a process may include as follows: First, the positioning server determines positioning priorities of the offline fingerprints based on the positioning sources and/or ACC of the reference point locations of the offline fingerprints. For example, priorities of the positioning sources of the offline fingerprints may be determined based on the positioning sources of the location fingerprint features, or the positioning priorities of the offline fingerprints may be determined comprehensively based on ACC and the priorities of the positioning sources of the location fingerprint features. For example, if it is determined that ACC of the reference point location in the row 1 in Table 18_1 is less than a first threshold, and a priority of the positioning source is a first positioning source priority, it is determined that a priority of the offline fingerprint in the row 1 is the first positioning priority. If it is determined that ACC in the row 2 in Table 18_1 is greater than the first threshold, and a positioning priority is the first positioning source priority, it may be determined that a positioning priority of the offline fingerprint in the row 2 is a second positioning priority. If it is determined that ACC in the row 3 in Table 18_1 is less than the first threshold, and a positioning source priority is a second positioning source priority, it may be determined that a positioning priority of the offline fingerprint in the row 3 is a third positioning priority. Then, the positioning server filters the offline fingerprints based on the positioning priorities of the offline fingerprints.

For example, offline fingerprints may be filtered based on a quantity of offline fingerprints of a CellID of a same base station. For example, if it is determined that there are plenty of offline fingerprints of a CellID of a same base station, only an offline fingerprint with a highest priority may be retained. Certainly, the offline fingerprints may alternatively be filtered in another manner, which is not limited herein. Then, the positioning server uses the filtered offline fingerprints as the offline fingerprints in the offline fingerprint database.

Through offline fingerprint filtering, the offline fingerprint database retains only information of reliable location fingerprint features, thereby effectively improving accuracy of offline positioning of the terminal device.

Further, the offline fingerprints may alternatively be filtered based on positioning sources and/or ACC in the offline fingerprints. Using the positioning sources as an example, a specific process may include as follows: The positioning server may determine the positioning sources of the first locations of the location fingerprint features as positioning sources of reference point locations in the offline fingerprints corresponding to the location fingerprint features. For example, for the location fingerprint feature in the row 1 in Table 8, it may be determined that an offline fingerprint corresponding to the row 1 in Table 8 is the row 1 in Table 18_3. Therefore, the positioning source, GPS, of the first location corresponding to the row 1 in Table 8 may be determined as the positioning source, GPS, of the reference point location of the offline fingerprint. Then, the positioning server determines a priority of the offline fingerprint based on the positioning source of the reference point location in the offline fingerprint, to filter offline fingerprints corresponding to a CellID of a base station. With reference to the foregoing example, the base station is the base station corresponding to CellIDA. Therefore, offline fingerprints corresponding to CellIDA include the rows 1, 4, 7, and 9 in Table 18_3. Based on priorities of positioning sources, the offline fingerprints corresponding to CellIDA may be filtered by using a preset rule. For example, if a priority of GPS is a first priority, a priority of Wi-Fi is a second priority, a priority of base station positioning is a third priority, and the preset rule may be retaining only an offline fingerprint with a highest priority, a filtered offline fingerprint corresponding to CellIDA includes the row 1 in Table 18_3. Next, the positioning server uses a filtered offline fingerprint corresponding to the CellID of the base station as an offline fingerprint corresponding to the CellID of the base station in the offline fingerprint database. With reference to the foregoing example, the row 1 in Table 18_3 may be used as an offline fingerprint corresponding to CellIDA in the offline fingerprint database.

In another possible implementation, the offline fingerprint may further include a status identifier of a base station in the offline fingerprint. The status identifier of the base station may include a plurality of states such as moving, stationary, reset, and uncertain. The "moving" may mean a scenario in which a change of a reference point location of an offline fingerprint corresponding to the base station is greater than a preset threshold in a short period of time. The "reset" may be a state after the base station is restarted. The stationary state indicates that the offline fingerprint corresponding to the base station is stable within a period of time, and a difference between an updated offline fingerprint determined by using a newly added location fingerprint feature related to the base station and the original offline fingerprint is within an allowed range. Therefore, the offline fingerprint may be filtered by using the status identifier of the offline fingerprint. For example, only an offline fingerprint with the stationary state is selected to generate the offline fingerprint database, thereby improving positioning accuracy and reliability. Certainly, the offline fingerprint may alternatively be filtered based on another condition, for example, factors such as signal strength, an ACC parameter of a reference point location, and a positioning source of the offline fingerprint. This is not limited herein.

To further reduce the size of the offline fingerprint database, serving base station information and mapped serving base station information of a CellID of a same base station may be combined into an offline fingerprint based on the CellID.

First, the positioning server searches, based on the CellIDs of the M serving base stations or the CellIDs of the N neighboring cell base stations corresponding to the M serving base stations, for P groups of base station information of a same CellID. For example, in Table 17, the plurality of first location fingerprints include five CellIDs: CellIDA, CellIDB, CellIDC, CellIDD, and CellIDF. Therefore, the serving base station information or the mapped serving base station information in Table 17 may be determined as five groups of base station information. Using CellIDA as an example, one group of base station information corresponding to CellIDA may include one or more of the rows 1, 4, 7, and 9 in Table 17.

Then, the positioning server determines the P offline fingerprints based on the P groups of base station information and a first location in a location fingerprint feature in which each group of base station information is located, where a reference point position in each offline fingerprint is related to the first location in each group of base station information; and a signal identifier in each offline fingerprint is related to a signal identifier in each group of base station information.

Specifically, for one of the P groups of base station information, the positioning server may perform weighted averaging on first locations in serving base station information that carries the CellID of the base station or first locations in mapped serving base station information that carries the CellID of the base station, to determine a reference point location. Then, the positioning server may perform weighted averaging on signal identifiers in the serving base station information that carries the CellID of the base station or signal identifiers in the mapped serving base station information that carries the CellID of the base station, to determine a signal identifier of the base station corresponding to the reference point location.

For example, an offline fingerprint is determined in Table 17 by performing weighted averaging on serving base station information based on CellIDA. There are two pieces of serving base station information based on CellIDA: the row 1 and the row 4 in Table 17. In this case, an offline fingerprint may be obtained through combination by performing weighted averaging on RSS. Specifically, a normalized weight may be determined by using the signal strength RSS1 in the row 1 in Table 17 and the signal strength RSS4 in the row 4 in Table 17. Assuming that RSS1=1 and RSS4=4, a weight corresponding to the row 1 in Table 17 is 1/(1+4)=0.25. Similarly, a weight corresponding to the row 4 in Table 17 is 0.75. If location information of an offline fingerprint based on CellIDA is (X01, Y01), X01=0.25^{∗}X1+0.75^{∗}X2, and Y01=0.25^{∗}Y1+0.75^{∗}Y2. If signal strength of the offline fingerprint of CellIDA is RSS1', RSS1'=0.25^{∗}RSS1+0.75^{∗}RSS4.

In another possible implementation manner, first, the positioning server searches, based on the CellIDs of the M serving base stations and the CellIDs of the N neighboring cell base stations corresponding to the M serving base stations, for P groups of base station information of a same CellID.

For example, for Table 17, it may be determined that five CellIDs are included: CellIDA, CellIDB, CellIDC, CellIDD, and CellIDF. Therefore, serving base station information and mapped serving base station information in Table 17 may be determined as five groups of base station information. Using CellIDA as an example, one group of base station information corresponding to CellIDA includes the rows 1, 4, 7, and 9 in Table 17. Then, the positioning server determines the P offline fingerprints based on the P groups of base station information and a first location in a location fingerprint feature in which each group of base station information is located, where a reference point position in each offline fingerprint is related to the first location in each group of base station information; and a signal identifier in each offline fingerprint is related to a signal identifier in each group of base station information.

For example, for CellIDA in Table 17, there are four pieces of serving base station information and mapped serving base station information based on CellIDA (in the rows 1, 4, 7, and 9), and one offline fingerprint may be generated based on the four pieces of serving base station information and mapped serving base station information.

Assuming that RSS1=1, RSS4=4, RSS8=8, and RSS10=10, a weight corresponding to the row 1 in Table 17 is 1/(1+4+8+10)=0.04. Similarly, a weight corresponding to the row 4 in Table 17 is 0.17, a weight corresponding to the row 7 in Table 17 is 0.34, and a weight corresponding to the row 9 in Table 17 is 0.43. If location information of an offline fingerprint 1 based on CellIDA is (X1', Y1'), X1'=0.04^{∗}X1+0.17^{∗}X2+0.34^{∗}X3+0.43^{∗}X4, and Y1'=0.04^{∗}Y1+0.17^{∗}Y2+0.34^{∗}Y3+0.43^{∗}Y4. If signal strength of the offline fingerprint of CellIDA is RSS1', RSS1'=0.04^{∗}RSS1+0.17^{∗}RSS4+0.34^{∗}RSS8+0.43^{∗}RSS10=7.74.

Similarly, there are three pieces of serving base station information and mapped serving base station information based on CellIDB: the row 2, the row 5, and the row 6 in Table 17, and an offline fingerprint 2 may be generated. There are two pieces of serving base station information and mapped serving base station information based on CellIDC: the row 3 and the row 8 in Table 17, and an offline fingerprint 3 may be generated. The three offline fingerprints generated by weighting the serving base station information and the mapped serving base station information may be shown in the following Table 20.

**Table 20**

| | | | | |
|---|---|---|---|---|
| Offline fingerprint 1 | Reference point location 1' (X1', Y1') | (CellIDA, (PIA, CNA), RSS1') | GPS, Wi-Fi, and base station positioning | 2019-7-3 11:00 |
| Offline fingerprint 2 | Reference point location 2' (X2', Y2') | (CellIDB, (PIB, CNB), RSS2') | GPS and Wi-Fi | 2019-7-2 11:00 |
| Offline fingerprint 3 | Reference point location 3' (X3', Y3') | (CellIDC, (PIC, CNC), RSS3') | GPS and base station positioning | 2019-7-3 11:00 |

It can be learned from above that in the foregoing solution, four pieces of serving base station information and six pieces of neighboring cell base station information in the location fingerprint features in the original Table 7 are compressed into three offline fingerprints, that is, 1/4 of an original size, and information carried in the original location fingerprint database is retained to a maximum extent, to ensure positioning precision. During actual location fingerprint database compression, a location fingerprint database may be compressed to 1/74 of an original size of the location fingerprint database, for the terminal device to locally store the offline fingerprint database, and implement high-precision offline positioning.

It should be noted that in the offline fingerprint determined in the foregoing combination manner, a positioning source corresponding to a reference point location may be a retained positioning source of each piece of serving base station information and/or a positioning source that corresponds to mapped serving base station information and that has a maximum weight, or may be a retained positioning source of each piece of serving base station information and/or a weight corresponding to a positioning source of mapped serving base station information.

In a possible implementation, a weight corresponding to each piece of serving base station information and/or mapped serving base station information may be comprehensively determined based on a signal identifier and/or a priority of a positioning source, to use a positioning source with a largest weight as a positioning source of the offline fingerprint. The following uses a manner of weighting based on serving base station information and mapped serving base station information as an example for description. The offline fingerprint of CellIDA is used as an example. It is assumed that it is determined that a priority weight of GPS is 0.6, a priority weight of Wi-Fi is 0.3, and a priority weight of base station positioning is 0.1. In Table 17, the row 1 includes GPS, the rows 4 and 7 include Wi-Fi, and the row 9 includes base station positioning. Therefore, it may be determined that a weight corresponding to the serving base station information in the row 1 in Table 17 is a product of a signal strength weight and a priority weight. To be specific, the weight of the serving base station information corresponding to the row 1 in Table 17 is 0.04×0.6=0.024. Similarly, a weight of the serving base station information corresponding to the row 4 in Table 17 is 0.17×0.3=0.051, a weight of the mapped serving base station information corresponding to the row 7 in Table 17 is 0.34 ×0.3=0.102, and a weight of the mapped serving base station information corresponding to the row 7 in Table 17 is 0.43 ×0.1=0.043. Therefore, it may be determined that a positioning source of the offline fingerprint 1 is Wi-Fi.

In another possible implementation, weights of signal strength may be first determined based on signal identifiers, and then proportions of positioning sources are determined based on the weights of the signal strength. With reference to the foregoing example, it may be determined that in the offline fingerprint 1, a proportion of GPS is 0.04, a proportion of Wi-Fi is 0.51, and a weight of base station positioning is 0.43. Therefore, the positioning sources of the offline fingerprint 1 may be stored as GPS (0.04), Wi-Fi (0.51), and base station positioning (0.43).

In the foregoing manner, the terminal device may determine reliability of matched offline fingerprints when performing positioning based on offline fingerprints, and may further filter the matched offline fingerprints based on positioning sources, to improve positioning precision.

Further, to improve reliability of positioning precision, when weighted averaging is performed for the offline fingerprint, a weight corresponding to serving base station information and/or mapped serving base station information may be jointly determined based on the priority weight determined by the positioning source and the weight of the signal strength determined by the signal identifier. First, the positioning server determines, based on the positioning source of the first location in the serving base station information of the CellID of the base station and/or the first location in the mapped serving base station information corresponding to the CellID of the base station, a priority of the serving base station information and/or a priority of the mapped serving base station information. Still using CellIDA as an example, in Table 17, a priority weight corresponding to a priority of the serving base station information in the row 1 may be set to 0.6/(0.6+0.3+0.3+0.1)=0.46, a priority weight corresponding to a priority of the serving base station information in the row 4 may be set to 0.3/(0.6+0.3+0.3+0.1)=0.23, a priority weight corresponding to a priority of the mapped serving base station information in the row 7 may be set to 0.3/(0.6+0.3+0.3+0.1)=0.23, and a priority weight corresponding to a priority of the mapped serving base station information corresponding to the row 9 may be set to 0.1/(0.6+0.3+0.3+0.1)=0.08.

Then, the positioning server determines a weight of the serving base station information and/or a weight of the mapped serving base station information based on the priority of the serving base station information and/or the priority of the mapped serving base station information, and the signal identifier in the serving base station information and/or the signal identifier in the mapped serving base station information. With reference to the foregoing example, in Table 17, a weight corresponding to the serving base station information in the row 1 may be 0.04×0.46/(0.0018+0.039+0.078+0.034)=0.10, a priority weight corresponding to the priority of the serving base station information in the row 4 may be set to 0.17×023/0.169=023, a priority weight corresponding to the priority of the mapped serving base station information corresponding to the row 7 may be set to 0.34×0.23/0.169=0.46, and a priority weight corresponding to the priority of the mapped serving base station information corresponding to the row 9 may be set to 0.43 ×0.08/0.169=02.

Next, the positioning server determines the reference point location based on the weight corresponding to the serving base station information and/or the weight corresponding to the mapped serving base station information, and the first location in the serving base station information and/or the first location in the mapped serving base station information. With reference to the foregoing example, if location information of the offline fingerprint based on CellIDA is (X", Y"), X11=0.1^{∗}X1+0.23^{∗}X2+0.46^{∗}X3+0.20^{∗}X4, and Y11=0.2^{∗}Y1+0.23^{∗}Y2+0.46^{∗}Y3+0.20^{∗}Y4.

Then, the positioning server determines, based on the weight corresponding to the serving base station information and/or the weight corresponding to the mapped serving base station information, and the signal identifier in the serving base station information and/or the signal identifier in the mapped serving base station information, a signal identifier of the base station corresponding to the reference point location. If signal strength of the offline fingerprint of CellIDA is RSS1", RSS1"=0.1^{∗}RSS1+0.23^{∗}RSS4+0.46^{∗}RSS8+0.2^{∗}RSS10.

In still another possible implementation, before the weighted averaging is performed on the serving base station information and/or the mapped serving base station information, the serving base station information and/or the mapped serving base station information corresponding to the CellID of the base station may be first filtered based on positioning sources, then a weight corresponding to each piece of filtered serving base station information and/or mapped serving base station information is determined based on a signal identifier of the filtered serving base station information and/or mapped serving base station information, and then weighted averaging is performed based on the weight corresponding to the filtered serving base station information and/or mapped serving base station information, to determine an offline fingerprint corresponding to the CellID of the base station.

CellIDA is still used as an example. For example, only serving base station information and mapped serving base station information of GPS positioning and Wi-Fi positioning are retained. To be specific, filtered serving base station information and/or mapped serving base station information includes the row 1, the row 4, and the row 7 in Table 17. Then, the offline fingerprint of CellIDA may be generated based on the row 1, the row 4, and the row 7 in Table 17. For a specific implementation, refer to the foregoing embodiment. Details are not described herein again.

It should be noted that a base station corresponding to the row 11 in Table 17 is the base station D, and combination may be performed based on related information of the base station D determined by using another location fingerprint feature; and a base station corresponding to the row 10 in Table 17 is the base station F, and combination may be performed based on related information of the base station F determined by using another location fingerprint feature.

In this case, one CellID corresponds to one offline fingerprint in the offline fingerprint database. After a new location fingerprint feature is added to the location fingerprint database, the offline fingerprint in the offline fingerprint database may be updated based on the new added location fingerprint feature. This update manner does not affect a size of the offline fingerprint database, so that the terminal device does not need to occupy a large amount of storage space and memory to implement offline positioning.

A specific update manner may include: splitting the newly added location fingerprint feature into serving base station information and mapped serving base station information, combining the newly added serving base station information or mapped serving base station information with a plurality of pieces of original serving base station information and/or mapped serving base station information corresponding to the CellID, regenerating a weight corresponding to the serving base station information and/or the mapped serving base station information, and then combining the newly added serving base station information or the mapped serving base station information with the plurality of pieces of original serving base station information and/or mapped serving base station information corresponding to the CellID, to generate an updated offline fingerprint.

Using CellIDA in Table 17 as an example, if it is determined that one piece of serving base station information and one piece of mapped serving base station information are newly added, serving base station information corresponding to the row 1 and the row 4 in Table 17 and the mapped serving base station information in the row 7 and the row 9 are combined with the newly added one piece of serving base station information and one piece of mapped serving base station information, to regenerate an offline fingerprint corresponding to CellIDA. A specific process of determining the weight is similar to the manner of determining a weight in the foregoing embodiment. Refer to the foregoing embodiment. Details are not described herein again.

According to the foregoing method, when performing positioning by using the locally stored offline fingerprint database, the terminal device can effectively use the neighboring cell base station information for positioning, instead of determining a current location by using a serving base station and a neighboring cell base station in a completely matched location fingerprint feature, thereby effectively reducing an amount of computation required for positioning of the terminal device, and reducing a time for matching. In addition, compared with a method in which positioning is directly performed by using serving base station information, precision of offline positioning of the terminal device can be effectively improved.

In this case, one piece of serving base station information or one piece of mapped serving base station information corresponds to one offline fingerprint in the offline fingerprint database. After a new location fingerprint feature is added to the location fingerprint database, the offline fingerprint in the offline fingerprint database may be updated based on the new added location fingerprint feature. An update manner may include: splitting the new added location fingerprint feature into serving base station information and mapped serving base station information, generating a corresponding offline fingerprint based on the newly added serving base station information or mapped serving base station information as an updated offline fingerprint, and sending the updated offline fingerprint to the terminal device. Further, the updated offline fingerprint and the original offline fingerprint may be further filtered based on a positioning source or the like, to improve positioning precision of the offline fingerprint database.

To help the terminal device quickly find a matched offline fingerprint based on the offline fingerprint database, to further improve positioning efficiency of the terminal device, in this embodiment of this application, the offline fingerprint may further include a grid identifier of a grid in which a reference point location of the offline fingerprint is located.

Specifically, the positioning server may assign an offline fingerprint to a corresponding longitude and latitude grid based on a reference point location in the offline fingerprint, so that the terminal device can quickly determine a location relationship between offline fingerprints by using a grid ID, and then quickly find, based on the location relationship between offline fingerprints, an offline fingerprint that matches a target location fingerprint, to accelerate a positioning speed and reduce an amount of computation for positioning of the terminal device. A specific size of the longitude and latitude grid may be determined based on positioning precision, and is not limited herein.

With reference to Table 20, if it is determined that the reference point location 1' and the reference point location 2' are located in a same longitude and latitude grid, and a corresponding grid ID is 1; and the reference point location 3' is located in another longitude and latitude grid, and a corresponding grid ID is 2, the offline fingerprints may be shown in the following Table 21.

**Table 21**

| | | | | | |
|---|---|---|---|---|---|
| Offline fingerprint 1 | Grid 1 | Reference point location 1' (X1', Y1') | (CellIDA, (PIA, CNA), RSS1') | GPS, Wi-Fi, and base station positioning | 2019-7-3 11:00 |
| Offline fingerprint 2 | Grid 1 | Reference point location 2' (X2', Y2') | (CellIDB, (PIB, CNB), RSS2') | GPS and Wi-Fi | 2019-7-2 11:00 |
| Offline fingerprint 3 | Grid 2 | Reference point location 3' (X3', Y3') | (CellIDC, (PIC, CNC), RSS3') | GPS and base station positioning | 2019-7-3 11:00 |

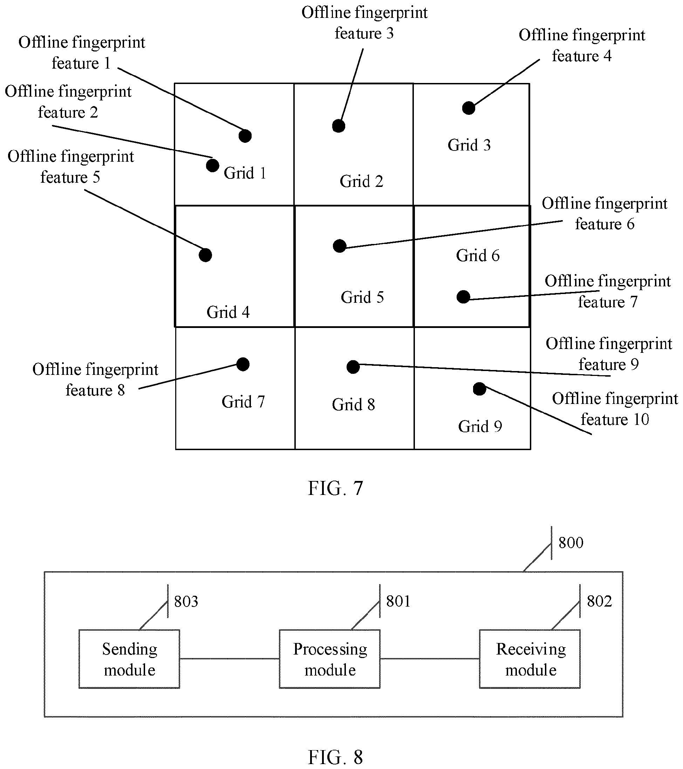

It is assumed that as shown in FIG. 7, one area may include nine grids. The positioning server may further obtain, based on other location fingerprint features reported by different terminal devices, a plurality of offline fingerprints corresponding to the grids located in the area. For example, by using the method for determining an offline fingerprint in the foregoing embodiment, an offline fingerprint database shown in Table 22 may be obtained.

**Table 22**

| | | | | | |
|---|---|---|---|---|---|
| Offline fingerprint 1 | Grid 1 | Reference point location 1 (X1, Y1) | (CellIDA, (PIA, CNA), RSS1) | GPS | 2019-7-3 11:00 |
| Offline fingerprint 2 | Grid 1 | Reference point location 2 (X2, Y2) | (CellIDA, (PIA, CNA), RSS2) | GPS | 2019-7-3 11:00 |
| Offline fingerprint 3 | Grid 2 | Reference point location 3 (X3, Y3) | (CellIDC, (PIC, CNC), RSS3) | GPS | 2019-7-3 11:00 |
| Offline fingerprint 4 | Grid 3 | Reference point location 4 (X4, Y4) | (CellIDI, (PID, CND), RSS4) | GPS | 2019-7-4 11:00 |
| Offline fingerprint 5 | Grid 4 | Reference point location 5 (X5, Y5) | (CellIDE, (PIE, CNE), RSS5) | GPS | 201-7-5 11:00 |
| Offline fingerprint 6 | Grid 5 | Reference point location 6 (X6, Y6) | (CellIDF, (PIF, CNF), RSS6) | GPS | 2019-7-7 11:00 |
| Offline fingerprint 7 | Grid 6 | Reference point location 7 (X7, Y7) | (CellIDG, (PIG, CNG), RSS7) | GPS | 2019-7-8 11:00 |
| Offline fingerprint 8 | Grid 7 | Reference point location 8 (X8, Y8) | (CellIDH, (PIH, CNH), RSS8) | GPS | 2019-7-9 11:00 |
| Offline fingerprint 9 | Grid 8 | Reference point location 9 (X9, Y9) | (CellIDJ, (PIJ, CNJ), RSS9) | GPS | 2019-7-10 11:00 |
| Offline fingerprint 10 | Grid 9 | Reference point location 10 (X10, Y10) | (CellIDK, (PIK, CNK), RSS10) | GPS | 2019-7-10 11:00 |

It should be noted that the size of the grid may be determined based on a requirement on positioning precision. If precision needs to be improved, the size of the grid may be reduced. If a search speed needs to be improved, the size of the grid may be increased. This may be determined based on an actual requirement.

Without affecting positioning precision, to further reduce the size of the offline fingerprint database sent to the terminal device, reduce impact of a pseudo base station on positioning, and reduce a quantity of location fingerprint features for which the location fingerprint database is searched and that need to be matched by the terminal device, to improve positioning efficiency and reduce memory consumed for positioning of the terminal device, one longitude and latitude grid may retain only one or more offline fingerprints with highest signal strength. A specific process is as follows: First, the positioning server determines N1 offline fingerprints in each grid based on the grid identifier of the grid in which the reference point location is located. Then, the positioning server filters the N1 offline fingerprints based on signal identifiers in the N1 offline fingerprints. N1 is a positive integer. In a possible implementation, the positioning server uses an offline fingerprint with highest signal strength in the signal identifiers in the N1 offline fingerprints as a filtered offline fingerprint corresponding to the grid. Certainly, a filtering manner may alternatively be determined based on an actual requirement. For example, the filtering is performed in a manner of determining, based on a size of a grid, a quantity of offline fingerprints to be filtered out. Then, an offline fingerprint obtained after grid filtering may be an offline fingerprint corresponding to the grid.

In an embodiment in which one CellID corresponds to one offline fingerprint, one grid may retain only one offline fingerprint with highest signal strength. With reference to Table 21, assuming that RSS1' is greater than RSS2', the row 2 in Table 21 may be deleted, and a generated offline fingerprint database may be shown in the following Table 23.

**Table 23**

| | | | | | |
|---|---|---|---|---|---|
| Offline fingerprint 1 | Grid 1 | Reference point location 1' (X1', Y1') | (CellIDA, (PIA, CNA), RSS1') | GPS, Wi-Fi, and base station positioning | 2019-7-3 11:00 |
| Offline fingerprint 3 | Grid 2 | Reference point location 3' (X3', Y3') | (CellIDC, (PIC, CNC), RSS3') | GPS and base station positioning | 2019-7-3 11:00 |

In the foregoing embodiment, offline fingerprints are filtered by using grids, thereby avoiding that the terminal device determines, based on a longitude and latitude grid, excessive offline fingerprints for matching degree calculation, and reducing an amount of computation of the terminal device. In addition, if a filtering condition is that an offline fingerprint is an offline fingerprint with highest signal strength, a problem that a possible pseudo base station interferes with positioning accuracy is avoided, and positioning accuracy is improved.

In addition, in a possible scenario, when the terminal device performs positioning, positioning cannot be performed if the terminal device determines that the offline fingerprint database does not include an offline fingerprint corresponding to a CellID of a first base station in a target location fingerprint. For example, a measured serving base station is CellIDB, but no offline fingerprint corresponding to CellIDB canbe found in Table 23. Based on this problem, the positioning server may store, in the offline fingerprint database, a relationship between a grid identifier of a grid in which an offline fingerprint before grid filtering is located and a CellID of the offline fingerprint before grid filtering. In another possible implementation, a correspondence between a CellID corresponding to a deleted offline fingerprint and a grid identifier may be further stored in the offline fingerprint database. For example, the offline fingerprint 2 is deleted from Table 23. A correspondence between CellIDB in the offline fingerprint 2 and the grid 1 may be added to the offline fingerprint database, as shown in Table 24.

**Table 24**

| | | | | | |
|---|---|---|---|---|---|
| Offline fingerprint 1 | Grid 1 | Reference point location 1' (Xl', Yl') | (CellIDA, (PIA, CNA), RSS1') | GPS, Wi-Fi, and base station positioning | 2019-7-3 11:00 |
| | Grid 1 | | CellIDB | | |
| Offline fingerprint 3 | Grid 2 | Reference point location 3' (X3', Y3') | (CellIDC, (PIC, CNC), RSS3') | GPS and base station positioning | 2019-7-3 11:00 |

This scenario is mainly because CellIDB may be a pseudo base station. To avoid impact of a signal of a pseudo base station on positioning precision, in this embodiment of this application, each grid may retain only an offline fingerprint with highest signal strength, to delete an offline fingerprint generated for the pseudo base station. In this case, the offline fingerprint in the offline fingerprint database may be an offline fingerprint filtered out by the positioning server based on the grid in which the offline fingerprint is located. The offline fingerprint database may further include the relationship between a CellID in an offline fingerprint before grid filtering and a grid identifier of a grid in which the offline fingerprint before grid filtering is located.

Step 303: The positioning server sends the offline fingerprint database to the terminal device.

The positioning server further performs text compression on the generated offline fingerprints to generate an offline fingerprint database, and delivers the offline fingerprint database to the terminal device. The terminal device may perform offline positioning based on the received offline fingerprint database.

Compared with a method in an existing technology in which a positioning server needs to traverse all location fingerprint features in a location fingerprint database based on a KNN algorithm, determine a plurality of location fingerprint features with a relatively high similarity based on serving base station information and neighboring cell base station information in matched location fingerprint features, and then matches the plurality of location fingerprint features against a target location fingerprint, resulting in a problem that related information of neighboring cell base stations in the location fingerprint features cannot be effectively used, in this embodiment of this application, the positioning server maps channel parameters of neighboring cell base stations in location fingerprint features to CellIDs of corresponding serving base stations to obtain CellIDs of the neighboring cell base stations. Therefore, when performing positioning by using the locally stored offline fingerprint database, the terminal device can effectively use all fingerprint information in the location fingerprint features, thereby ensuring that the offline fingerprint database does not increase with time while ensuring that precision is improved, and improving positioning precision of the terminal device while effectively ensuring a compression degree of the offline fingerprint database. Precision of offline positioning and an offline positioning effect can be effectively improved without increasing the size of the offline fingerprint database.

### The second phase is a positioning phase.

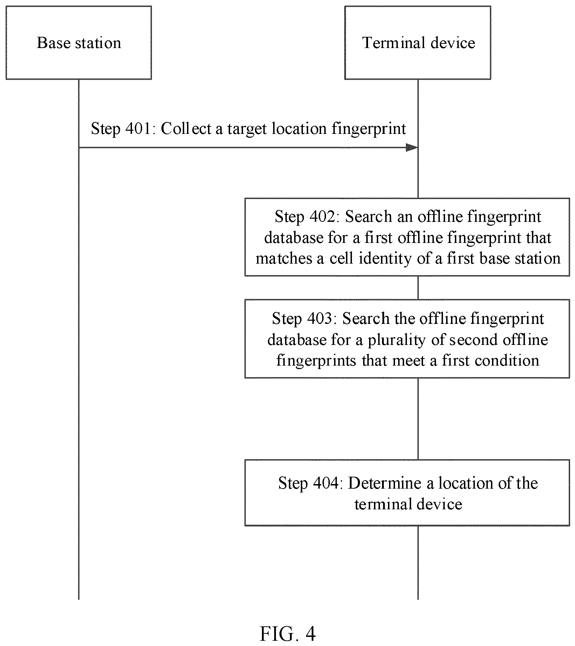

Based on the foregoing embodiment, the terminal device may perform offline positioning based on the offline fingerprint database delivered in advance by the positioning server. As shown in FIG. 4, a specific positioning process may include the following steps.

Step 401: The terminal device collects a target location fingerprint.

The target location fingerprint includes a signal identifier of a first base station, a cell identity CellID of the first base station, signal identifiers of Q neighboring cell base stations of the first base station, and channel parameters of the Q neighboring cell base stations; the first base station is a serving base station accessed by the terminal device; and Q is a positive integer.

For example, it is assumed that a serving base station accessed by the terminal device at a current moment is a base station F, and a cell identity is CellIDF; and channel parameters of neighboring cells are (PIC, CNC) and (PIA, CNA). A first target location fingerprint measured at the current moment is obtained by measuring signal strength of base station signals received from the base station (PIA, CNA), the base station (PIC, CNC), and the base station F. In this case, the first target location fingerprint may be shown in the following Table 25.

**Table 25**

| First target location fingerprint | Timestamp |
|---|---|
| CellIDF, (PIF, CNF), RSS01 | 2019-8-1 10:00 |
| (PIC, CNC), RSS02 | |
| (PIA, CNA), RSS03 | |

Step 402: The terminal device searches, by using the CellID of the first base station, the offline fingerprint database for a first offline fingerprint that matches the CellID of the first base station.

The offline fingerprint database is stored in the terminal device, and the offline fingerprint database is configured to manage a plurality of offline fingerprints. Each offline fingerprint includes a CellID, a signal identifier, and a channel parameter that are of a base station, and a reference point location.

With reference to the foregoing example, the NO first offline fingerprints matching the target location fingerprint may be NO first offline fingerprints including the CellID of the first base station.

The offline fingerprint database in Table 18_3 is used as an example. An offline fingerprint generated in another embodiment is also applicable to the offline positioning method. For details, refer to this example. There is one piece of serving base station information about the base station F, that is, an offline fingerprint in the row 6 in Table 18_3. In this case, N is 1. The terminal device may use the offline fingerprint in the row 6 in Table 18_3 as the first offline fingerprint that matches the target location fingerprint.

In a scenario in which an offline fingerprint includes a grid, the terminal device may search, based on the cell identity CellIDF in the first target location fingerprint, Table 22 for an offline fingerprint with the cell identity CellIDF, which includes an offline fingerprint 11 and an offline fingerprint 6.

In another possible scenario, the offline fingerprint database may not include the CellID of the serving base station received by the terminal device.

For example, the terminal device collects a second target location fingerprint. A first base station in the second target location fingerprint is a base station B, and a cell identity is CellIDB; and neighboring cells are the base station C and a base station E. The second target location fingerprint measured at the current moment is obtained by measuring signal strength of received signals sent by the base station B, the base station C, and the base station E. In this case, the second target location fingerprint may be shown in Table 26.

**Table 26**

| Second target location fingerprint | Timestamp |
|---|---|
| CellIDB, (PIB, CNB), RSS011 | 2019-8-2 10:00 |
| (PIC, CNC), RSS012 | |
| (PIE, CNE), RSS013 | |

In this case, if determining that the offline fingerprint database does not include an offline fingerprint corresponding to the CellID of the first base station in the second target location fingerprint, the terminal device searches, based on a relationship between a CellID of an offline fingerprint before grid filtering and a grid identifier of a grid in which the offline fingerprint before grid filtering is located, for a second grid identifier of a second grid corresponding to the CellID of the first base station. With reference to the foregoing example, the terminal device cannot obtain, from Table 23, an offline fingerprint corresponding to CellIDB. Therefore, the terminal device may search, based on Table 24, a correspondence between CellIDB and a grid, and determine that a grid in which CellIDB is located is a grid 1. Then, the terminal device uses NO offline fingerprints corresponding to the second grid identifier as NO first offline fingerprints matching the first base station.

According to the foregoing design, the terminal device may find the grid 1 by using CellIDB, and use an offline fingerprint 1 corresponding to the grid 1 as a first offline fingerprint matching the second target location fingerprint. According to the foregoing method, fast positioning of the terminal device is facilitated while compression of the offline fingerprint database is ensured.

Step 403: The terminal device searches, based on a reference point location in the first offline fingerprint and the channel parameters of the Q neighboring cell base stations, the offline fingerprint database for a plurality of second offline fingerprints that meet a first condition.

The first condition is that a channel parameter carried in an offline fingerprint is the same as one of the channel parameters of the Q neighboring cell base stations, and a reference point location carried in the offline fingerprint is within a first neighboring cell search range. The first neighboring cell search range is a limited area including the reference point location in the first offline fingerprint.

In a scenario without a grid identifier, a specific process may be as follows:

First, the terminal device determines the first neighboring cell base station search range based on a signal coverage range of the first base station by using the reference point location in the first offline fingerprint as a center.

In a possible implementation, signal coverage radiuses of different base stations may be determined based on different signal standards. For example, a signal coverage radius of a 2G signal standard is 20 km, a signal coverage radius of a 3G signal standard is 5 km, and a signal coverage radius of a 4G signal standard is 3 km.

Then, the terminal device determines, by using the reference point location in the first offline fingerprint as a center, the first neighboring cell base station search range based on a signal coverage range determined by a signal standard of the first base station. Certainly, a radius of the first neighboring cell base station search range may alternatively be determined in another manner, which is not limited herein.

With reference to the foregoing example, the first neighboring cell base station search range corresponding to the first offline fingerprint may be determined based on a reference point location 5 by using a signal coverage radius corresponding to a signal standard of the base station F as the radius of the first neighboring cell base station search range.

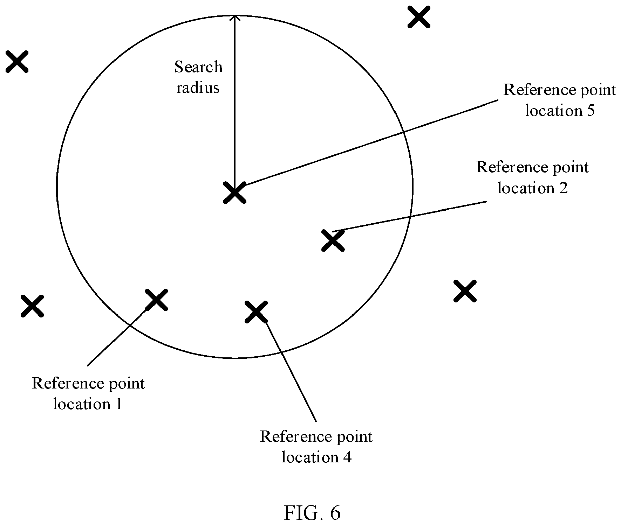

Then, the terminal device searches, based on the first neighboring cell base station search range, the offline fingerprint database for L1 offline fingerprints whose reference point locations are within the first neighboring cell base station search range. L1 is a positive integer. As shown in FIG. 6, if it is determined that a reference point location 1, a reference point location 2, and a reference point location 4 are within the first neighboring cell base station search range, serving base station information in the row 1 in Table 18_3 corresponding to the reference point location 1, serving base station information in the row 3 in Table 18_3 corresponding to the reference point location 2, and an offline fingerprint in the row 4 in Table 18_3 corresponding to the reference point location 3 are used as three second offline fingerprints within the first neighboring cell base station search range.

Then, the terminal device determines a plurality of second offline fingerprints from the L1 offline fingerprints, where the plurality of second offline fingerprints are a plurality of offline fingerprints including channel parameters that are the same as the channel parameters of the Q neighboring cell base stations.

Then, the terminal device uses the plurality of offline fingerprints as the plurality of second offline fingerprints that meet the condition. For example, a channel parameter in the serving base station information in the row 1 in Table 18_3 corresponding to the reference point location 1 matches neighboring cell base station information corresponding to (PIA, CNA), and the serving base station information in the row 4 in Table 18_3 corresponding to the reference point location 3 matches neighboring cell base station information corresponding to (PIC, CNC). Therefore, offline fingerprints in the two rows may be used as two second offline fingerprints in the first neighboring cell base station search range.

In this way, the terminal device may use the first offline fingerprint and the plurality of second offline fingerprints as a reconstructed fingerprint feature that matches the target location fingerprint.

With reference to the foregoing example, there is one reconstructed fingerprint feature that matches the first target location fingerprint. The reconstructed fingerprint feature determined based on the first offline fingerprint (the serving base station information in the row 6 in Table 22) and the second offline fingerprints (serving base station information in the rows 1 and 4 in Table 22) may be shown in the following Table 27.

**Table 27**

| | Location information | Location fingerprint |
|---|---|---|
| Serving base station information | Reference point location 5 (X5, Y5) | (CellIDF, (PIF, CNF), RSS11) |
| Neighboring cell base station information | Reference point location 4 (X4, Y4) | (CellIDC, (PIC, CNC), RSS9) |
| | Reference point location 1 (X1, Y1) | (CellIDA, (PIA, CNA), RSS1) |

In a scenario in which an offline fingerprint includes a grid, using the first target location fingerprint as an example, in step 402, two first offline fingerprints may be determined for the offline fingerprint 6. In a possible implementation, a process may include as follows:

First, the terminal device determines a first grid identifier of a first grid in which the reference point location in the first offline fingerprint is located. R neighboring grids corresponding to the first grid are the first neighboring cell base station search range. R is a positive integer.

For example, the first offline fingerprint is the offline fingerprint 6. A grid in which the offline fingerprint 6 is located is a grid 5. Neighboring grids of the grid 5 may be determined. A specific manner of determining a neighboring network may be using grids in four directions, namely, east, west, south, and north, as neighboring grids. For example, neighboring grids of the grid 5 are a grid 2, a grid 4, a grid 6, and a grid 8. In another manner of determining a neighboring network, a grid within a sector range may be selected as a neighboring grid. For example, neighboring grids of the grid 4 are a grid 1, a grid 2, and a grid 4. A specific manner of selecting a neighboring grid may be determined based on a requirement, and is not limited herein.

Then, the terminal device determines K1 offline fingerprints corresponding to grid identifiers of the R neighboring grids corresponding to the first grid.

For example, the neighboring grids of the grid 5 are the grid 2, the grid 4, the grid 6, and the grid 8, and offline fingerprints corresponding to the neighboring grids of the grid 5 are an offline fingerprint 3, an offline fingerprint 5, an offline fingerprint 7, and an offline fingerprint 9.

Then, the terminal device determines a plurality of second offline fingerprints from the K1 offline fingerprints. K1 is a positive integer.

The plurality of second offline fingerprints are a plurality of offline fingerprints including channel parameters that are the same as the channel parameters of the Q neighboring cell base stations.

Then, the terminal device may determine a reconstructed fingerprint feature based on the K1 offline fingerprints and the first offline fingerprint. Because a plurality of offline fingerprints may exist in one grid, a plurality of second offline fingerprints may be further determined based on neighboring grids, and a plurality of reconstructed fingerprint features may be formed. In a possible manner, a quantity of reconstructed fingerprint features may be determined based only on a quantity of first offline fingerprints. Assuming that the quantity of first offline fingerprints is 2, it may be determined that the quantity of reconstructed fingerprint features is also 2. A plurality of second offline fingerprints determined based on all the first offline fingerprints are all neighboring cell base station information in the reconstructed fingerprint features.

In a possible implementation, the terminal device generates one reconstructed fingerprint feature based on each first offline fingerprint. For each first offline fingerprint, K1 offline fingerprints and the first offline fingerprint are used as a reconstructed fingerprint feature.

With reference to the foregoing example, the offline fingerprint 6 may be used as serving base station information in a reconstructed fingerprint feature, and the offline fingerprint 3, the offline fingerprint 5, the offline fingerprint 7, and the offline fingerprint 9 corresponding to the neighboring grids are used as neighboring cell base station information in the reconstructed fingerprint feature. In this case, the reconstructed fingerprint feature may be shown in Table 28.

**Table 28**

| | Grid information | Location information | Location fingerprint |
|---|---|---|---|
| Serving base station information | Grid 5 | Reference point location 6 (X6, Y6) | (CellIDF, (PIF, CNF), RSS6) |
| Neighboring cell base station information | Grid 2 | Reference point location 3 (X3, Y3) | (CellIDC, (PIC, CNC), RSS3) |
| | Grid 4 | Reference point location 5 (X5, Y5) | (CellIDE, (PIE, CNE), RSS5) |
| | Grid 6 | Reference point location 7 (X7, | (CellIDG, (PIG, CNG), RSS7) |
| | | Y7) | |
| | Grid 8 | Reference point location 9 (X9, Y9) | (CellIDJ, (PIJ, CNJ), RSS9) |

In another possible manner, to reduce a size of a reconstructed fingerprint feature, a plurality of second offline fingerprints that match channel parameters of neighboring cell base stations in the first target location fingerprint may be determined from the K1 offline fingerprints. Specifically, a process may include as follows:

The terminal device matches a channel parameter of each of the K1 offline fingerprints against the channel parameters of the Q neighboring cell base stations. With reference to the foregoing example, an offline fingerprint corresponding to the grid 2 matches (PIC, CNC) in the first target location fingerprint, and an offline fingerprint corresponding to the grid 4 matches (PIE, CNE) in the first target location fingerprint. Then, the terminal device uses a plurality of matched offline fingerprints as a plurality of second offline fingerprints that match the channel parameters of the Q neighboring cell base stations. Therefore, it may be determined that there are two second offline fingerprints: the offline fingerprint corresponding to the grid 2 and the offline fingerprint corresponding to the grid 4. Therefore, the terminal device may use the first offline fingerprint and the plurality of second offline fingerprints as a reconstructed fingerprint feature that matches the target location fingerprint.

With reference to the foregoing example, in this case, the reconstructed fingerprint feature may be shown in Table 29.

**Table 29**

| | Grid information | Location information | Location fingerprint |
|---|---|---|---|
| Serving base station information | Grid 5 | Reference point location 6 (X6, Y6) | (CellIDF, (PIF, CNF), RSS6) |
| Neighboring cell base station information | Grid 2 | Reference point location 3 (X3, Y3) | (CellIDC, (PIC, CNC), RSS3) |
| | Grid 4 | Reference point location 5 (X5, Y5) | (CellIDE, (PIE, CNE), RSS5) |

In a scenario in which a plurality of offline fingerprints exist in one grid, an example in which the first offline fingerprint is in the grid 5 is used. It is assumed that the grid 2 includes two offline fingerprints, the grid 4 includes two offline fingerprints, the grid 6 includes one offline fingerprint, and the grid 8 includes one offline fingerprint. Then, K1 is 6, and a correspondingly generated reconstructed fingerprint feature includes one offline fingerprint corresponding to the grid 5, the two offline fingerprints corresponding to the grid 2, the two offline fingerprints corresponding to the grid 4, the one offline fingerprint corresponding to the grid 6, and the one offline fingerprint corresponding to the grid 8.

Further, it is assumed that four second offline fingerprints that match the channel parameters of the neighboring cell base stations in the first target location fingerprint may be determined from the six offline fingerprints. In this case, a process of generating a reconstructed fingerprint feature may include as follows: First, the terminal device matches a channel parameter of each of the six offline fingerprints against the channel parameters of the two first neighboring cell base stations. With reference to the foregoing example, the two offline fingerprints corresponding to the grid 2 match (PIC, CNC) in the first target location fingerprint, and the two offline fingerprints corresponding to the grid 4 match (PIE, CNE) in the first target location fingerprint. Therefore, the terminal device may use the four matched offline fingerprints as four second offline fingerprints that match the channel parameters of the two first neighboring cell base stations. In other words, the terminal device may determine that there are four second offline fingerprints: the two offline fingerprints corresponding to the grid 2 and the two offline fingerprints corresponding to the grid 4. Then, the terminal device may use the first offline fingerprint and the two second offline fingerprints as a reconstructed fingerprint feature that matches the first target location fingerprint.

In another possible implementation, a quantity of reconstructed fingerprint features that can be generated for an offline fingerprint may be determined based on a quantity of second offline fingerprints in a neighboring network, and then a reconstructed fingerprint feature that can be generated is determined based on each first offline fingerprint.

For example, the first offline fingerprint is in the grid 5. If it is determined that the grid 2 includes two offline fingerprints (an offline fingerprint 2-1 and an offline fingerprint 2-2), the grid 4 includes two offline fingerprints (an offline fingerprint 4-1 and an offline fingerprint 4-2), the grid 6 includes one offline fingerprint, and the grid 8 includes one offline fingerprint, four reconstructed fingerprint features may be generated. In this case, K1 is 6, and one offline fingerprint is selected from each grid as an offline fingerprint corresponding to the grid.

Therefore, a reconstructed fingerprint feature 1-1 may include the offline fingerprint 2-1, the offline fingerprint 4-1, the offline fingerprint corresponding to the grid 6, the offline fingerprint corresponding to the grid 8, and the offline fingerprint corresponding to the grid 2. A reconstructed fingerprint feature 1-2 may include the offline fingerprint 2-1, the offline fingerprint 4-2, the offline fingerprint corresponding to the grid 6, the offline fingerprint corresponding to the grid 8, and the offline fingerprint corresponding to the grid 2. A reconstructed fingerprint feature 1-3 may include the offline fingerprint 2-2, the offline fingerprint 4-1, the offline fingerprint corresponding to the grid 6, the offline fingerprint corresponding to the grid 8, and the offline fingerprint corresponding to the grid 2. A reconstructed fingerprint feature 1-4 may include the offline fingerprint 2-2, the offline fingerprint 4-2, the offline fingerprint corresponding to the grid 6, the offline fingerprint corresponding to the grid 8, and the offline fingerprint corresponding to the grid 2.

Step 404: The terminal device determines a location of the terminal device based on the signal identifier and the reference point location in the first offline fingerprint, signal identifiers and reference point locations in the plurality of second offline fingerprints, and the Q+1 signal identifiers in the target location fingerprint.

In a scenario without a grid identifier, for example, a reconstructed fingerprint feature is matched against the first target location fingerprint to determine a first target location of the terminal device. A specific process may include as follows:

First, the terminal device matches the signal identifier of the first offline fingerprint against the signal identifier of the first target location fingerprint of the first base station, to determine a weight corresponding to the first offline fingerprint.

For example, for the base station F, a similarity between the signal strength RSS11 of the reconstructed fingerprint feature and the signal strength RSS01 in the first target location fingerprint is 0.8.

Then, the terminal device determines, based on the signal identifiers of the plurality of second offline fingerprints and signal identifiers of target location fingerprints of the Q neighboring cell base stations, weights corresponding to the plurality of second offline fingerprints.

For example, for the base station C, a similarity between the signal strength RSS9 of the reconstructed fingerprint feature and the signal strength RSS02 in the first target location fingerprint is 0.6. For the base station A, a similarity between the signal strength RSS1 of the reconstructed fingerprint feature and the signal strength RSS03 in the first target location fingerprint is 0.3.

Then, the terminal device determines a second location of the terminal device based on reference point locations in reconstructed fingerprint features and the corresponding weights.

Specifically, the terminal device determines the second location based on the weight corresponding to the first offline fingerprint, the weights corresponding to the plurality of second offline fingerprints, the reference point location, and the reference point locations of the plurality of second offline fingerprints. For example, if it is determined that the second location of the terminal device is (X', Y'),

X'=0.8^{∗}X5+0.6^{∗}X4+0.3^{∗}X1, and Y'=0.8^{∗}Y5+0.6^{∗}Y4+0.3^{∗}Y1.

Compared with a method in an existing technology in which a positioning server needs to traverse all location fingerprint features in a location fingerprint database based on a KNN algorithm, to determine a plurality of location fingerprint features with a relatively high similarity for matching, in this embodiment of this application, according to the foregoing method, when performing positioning by using the locally stored offline fingerprint database, the terminal device may determine the plurality of matched offline fingerprints based only on the CellID of the serving base station and the grid identifier, and directly determine a location through weighted averaging, thereby reducing an amount of computation required for positioning of the terminal device, and effectively improving precision of offline positioning and an offline positioning effect.

In a scenario in which an offline fingerprint includes a grid identifier, for example, a reconstructed fingerprint feature is matched against the first target location fingerprint to determine a first target location of the terminal device. A specific process may include as follows:

First, the terminal device matches the signal identifier in the first offline fingerprint against the signal identifier of the first base station, to determine a weight corresponding to the first offline fingerprint. For example, the first offline fingerprint in the reconstructed fingerprint feature is the offline fingerprint 6. In this case, for the base station F, a similarity between the signal strength RSS6 of the reconstructed fingerprint feature and the signal strength RSS01 in the first target location fingerprint is 0.8.

Then, for each of the plurality of second offline fingerprints, the terminal device determines, by using a channel parameter, a first neighboring cell base station that matches the second offline fingerprint. The terminal device determines, based on a signal identifier of the matched first neighboring cell base station and a signal identifier in the second offline fingerprint, a weight corresponding to the second offline fingerprint. For the base station C, a similarity between the signal strength RSS3 of the reconstructed fingerprint feature and the signal strength RSS02 in the first target location fingerprint is 0.6. For the base station E, a similarity between the signal strength RSS05 of the reconstructed fingerprint feature and the signal strength RSS03 in the first target location fingerprint is 0.3.

Then, the terminal device determines a second location based on the weight corresponding to the first offline fingerprint, the reference point location of the first offline fingerprint, weights corresponding to the plurality of second offline fingerprints, and the reference point locations of the plurality of second offline fingerprints. With reference to the foregoing example, for example, the first offline fingerprint in the reconstructed fingerprint feature is the offline fingerprint 6. If it is determined that the second location of the terminal device is (X1', Y1'), X1'=0.8^{∗}X6'+0.6^{∗}X3'+0.3^{∗}X5', and Y1'=0.8^{∗}Y6'+0.6^{∗}Y3'+0.3^{∗}Y5

Further, in a scenario in which there are NO reconstructed fingerprint features, if determining that the quantity of first offline fingerprints is N0, the terminal device searches, based on a reference point location of each of the NO first offline fingerprints and the channel parameters of the Q neighboring cell base stations, the offline fingerprint database for W second offline fingerprints that meet the first condition. W is a positive integer. The terminal device determines the location of the terminal device based on signal identifiers and reference point locations in the NO first offline fingerprints, signal identifiers and reference point locations in the W second offline fingerprints, and the Q+1 signal identifiers in the target location fingerprint.

One second location may be generated for each of the NO reconstructed fingerprint features. Therefore, the terminal device may perform weighted averaging on the NO second locations to determine the location of the terminal device. Weights may be determined based on a positioning source in a reconstructed fingerprint feature corresponding to each second location, or may be determined based on a positioning source corresponding to each second location and signal strength in the reconstructed fingerprint feature. This is not limited herein.

According to the foregoing method, when performing positioning by using the locally stored offline fingerprint database, the terminal device does not need to match the target location fingerprint against serving base station information and a plurality of pieces of neighboring cell base stations information in location fingerprint features, to determine a plurality of location fingerprint features with a relatively high similarity, but only needs to determine a plurality of matched offline fingerprints based on a grid identifier, and directly determine the location through weighted averaging. This can reduce an amount of computation required for positioning of the terminal device, and improve positioning efficiency and positioning precision.

In the foregoing embodiments provided in this application, the methods provided in the embodiments of this application are separately described from perspectives of a positioning server, a terminal device, and interaction between the two. To implement functions in the methods provided in the foregoing embodiments of this application, the positioning server and at least one terminal device may include a hardware structure and/or software module, to implement the functions in a form of a hardware structure, a software module, or a hardware structure plus a software module. Whether one of the functions is implemented by using the hardware structure, the software module, or the hardware structure and the software module depends on a specific application and a design constraint condition of a technical solution.

FIG. 8 is a schematic structural diagram of a communication apparatus 800. The offline fingerprint database generation apparatus 800 may be a network device, and can implement a function of the positioning server in the method provided in the embodiments of this application. Alternatively, the offline fingerprint database generation apparatus 800 may be an apparatus that can support a positioning server in implementing a function of the positioning server in the method provided in the embodiments of this application. The offline fingerprint database generation apparatus 800 may be a hardware structure, a software module, or a hardware structure plus a software module. The offline fingerprint database generation apparatus 800 may be implemented by a chip system. In this embodiment of this application, the chip system may include a chip, or may include a chip and another discrete device.

The offline fingerprint database generation apparatus 800 may include a processing module 801, a receiving module 802, and a sending module 803.

The processing module 801 may be configured to perform a step in the embodiment shown in FIG. 3, and/or configured to support another process of the technology described in this specification. The receiving module 802 and the sending module 803 are configured for the offline fingerprint database generation apparatus 800 to communicate with another module, and may be a circuit, a component, an interface, a bus, a software module, a transceiver, or any other apparatus that can implement communication.

The receiving module 802 may be configured to perform step 301 in the embodiment shown in FIG. 3, and/or configured to support another process of the technology described in this specification. The sending module 803 may be configured to perform step 303 in the embodiment shown in FIG. 3, and/or configured to support another process of the technology described in this specification.

All related content of steps in the foregoing method embodiments may be cited in function descriptions of corresponding functional modules. Details are not described herein again.

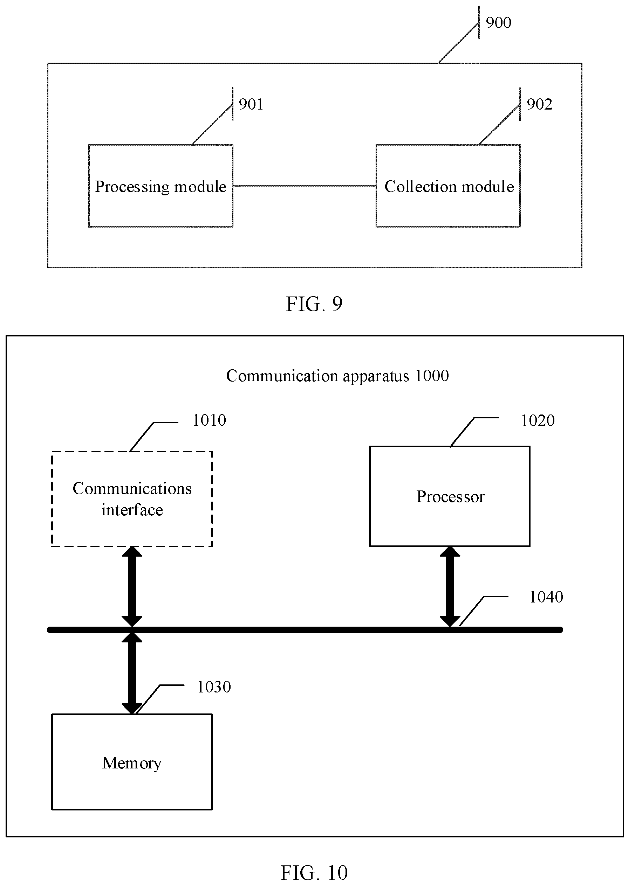

FIG. 9 is a schematic structural diagram of a positioning apparatus 900. The positioning apparatus 900 may be a terminal device, and can implement a function of the terminal device in the method provided in the embodiments of this application. Alternatively, the positioning apparatus 900 may be an apparatus that can support a terminal device in implementing a function of the terminal device in the method provided in the embodiments of this application. The positioning apparatus 900 may be a hardware structure, a software module, or a hardware structure plus a software module. The positioning apparatus 900 may be implemented by a chip system. In this embodiment of this application, the chip system may include a chip, or may include a chip and another discrete device.

The positioning apparatus 900 may include a processing module 901 and a collection module 902.

The processing module 901 may be configured to perform step 402 to step 404 in the embodiment shown in FIG. 4, and/or configured to support another process of the technology described in this specification.

The collection module 902 may be configured to perform step 401 in the embodiment shown in FIG. 4, and/or configured to support another process of the technology described in this specification. The collection module 902 is configured for the positioning apparatus 900 to communicate with another module, and may be a circuit, a component, an interface, a bus, a software module, a transceiver, or any other apparatus that can implement communication.

All related content of steps in the foregoing method embodiments may be cited in function descriptions of corresponding functional modules. Details are not described herein again.

Division of the modules in the embodiments of this application is an example, and is merely division of logical functions. In actual implementation, another division manner may be used. In addition, functional modules in the embodiments of this application may be integrated into one processor, or may exist alone physically, or two or more modules may be integrated into one module. The integrated module may be implemented in a form of hardware, or may be implemented in a form of a software functional module.

FIG. 10 shows a communication apparatus 1000 according to an embodiment of this application. The communication apparatus 1000 may be the positioning server in the embodiment shown in FIG. 3, and can implement a function of the positioning server in the method provided in the embodiments of this application. Alternatively, the communication apparatus 1000 may be an apparatus that can support an access network device in implementing a function of the positioning server in the method provided in the embodiments of this application. The communication apparatus 1000 may be a chip system. In this embodiment of this application, the chip system may include a chip, or may include a chip and another discrete device.

The communication apparatus 1000 includes at least one processor 1020, configured to implement or support the communication apparatus 1000 in implementing the function of the positioning server in the method provided in the embodiments of this application. For example, the processor 1020 matches the CellIDs of the M serving base stations with the signal identifiers and the channel parameters in the information about the plurality of base stations, to generate P offline fingerprints, where P is greater than M; the plurality of offline fingerprints are stored in the offline fingerprint database; each offline fingerprint includes a CellID, a signal identifier, and a channel parameter that are of a base station, and a reference point location; M, N, and P are positive integers; and the CellID included in each offline fingerprint is a CellID of any one of the M serving base stations, and the reference point location is related to a first location corresponding to the CellID carried in the offline fingerprint. For details, refer to detailed descriptions in the method example. Details are not described herein again.

The communication apparatus 1000 may further include at least one memory 1030, configured to store a program instruction and/or data. The memory 1030 is coupled to the processor 1020. The coupling in this embodiment of this application is indirect coupling or a communication connection between apparatuses, units, or modules for information exchange between the apparatuses, the units, or the modules, and may be in electrical, mechanical, or other forms. The processor 1020 may cooperate with the memory 1030. The processor 1020 may execute the program instruction stored in the memory 1030, to implement a function of the processing module in FIG. 8 in the embodiments of this application. At least one of the at least one memory may be included in the processor.

The communication apparatus 1000 may further include a communications interface 1010, configured to communicate with another device by using a transmission medium, so that an apparatus used in the communication apparatus 1000 can communicate with another device. For example, the another device may be a network device. The processor 1020 may send and receive data by using the communications interface 1010.

In this embodiment of this application, an antenna and a radio frequency circuit that have a transceiver function may be considered as a receiving module and a sending module of the positioning server, and a processor that has a processing function may be considered as a processing module of the positioning server. The communications interface 1010 may also be referred to as a transceiver component, a transceiver, a transceiver apparatus, or the like. The processor 1020 may also be referred to as a processing unit, a processing board, a processing module, a processing apparatus, or the like. Optionally, a component that is configured to implement a receiving function and that is in the communications interface 1010 may be considered as a receiving module, and a component that is configured to implement a sending function and that is in the communications interface 1010 may be considered as a sending module. In other words, the communications interface 1010 includes a receiving module and a sending module. The receiving module sometimes may also be referred to as a transceiver, a transceiver component, a transceiver circuit, or the like. The receiving module sometimes may also be referred to as a receiver, a receive component, a receive circuit, or the like. The sending module sometimes may also be referred to as a transmitter, a transmit component, a transmit circuit, or the like.

It should be understood that the communications interface 1010 is configured to perform receiving and sending operations of the positioning server in the foregoing method embodiments, and the processor 1020 is configured to perform another operation of the positioning server in the foregoing method embodiments other than the receiving and sending operations.

For example, in an implementation, the communications interface 1010 is configured to perform the receiving and sending operations of the positioning server in step 301 and step 303 in FIG. 3, and/or the communications interface 1010 is further configured to perform other sending and receiving steps of the positioning server in the embodiments of this application. The processor 1020 is configured to perform step 302 in FIG. 3, and/or the processor 1020 is further configured to perform another processing step of the positioning server in the embodiments of this application.

When the communication apparatus is a chip, the chip includes a receiving module, a sending module, and a processing module. The receiving module and the sending module may be an input/output circuit or a communications interface. The processing module is a processor, a microprocessor, or an integrated circuit integrated on the chip.

A specific connection medium between the communications interface 1010, the processor 1020, and the memory 1030 is not limited in this embodiment of this application. In this embodiment of this application, the memory 1030, the processor 1020, and the communications interface 1010 are connected by using a bus 1040 in FIG. 10. The bus is represented by using a bold line in FIG. 10. Such a manner of connection between components is merely an example for description, and imposes no limitation. The bus may be classified into an address bus, a data bus, a control bus, and the like. For ease of representation, only one bold line is used to represent the bus in FIG. 10, but this does not mean that there is only one bus or only one type of bus.

In this embodiment of this application, the processor 1020 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in the embodiments of this application. The general-purpose processor may be a microprocessor or any conventional processor or the like. The steps of the method disclosed with reference to the embodiments of this application may be directly performed by a hardware processor, or may be performed by using a combination of hardware in the processor and a software module.

In this embodiment of this application, the memory 1030 may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory may be, but is not limited to, any other medium that can be used to carry or store expected program code in a form of an instruction or a data structure and that can be accessed by a computer. The memory in this embodiment of this application may alternatively be a circuit or any other apparatus that can implement a storage function, to store a program instruction and/or data.

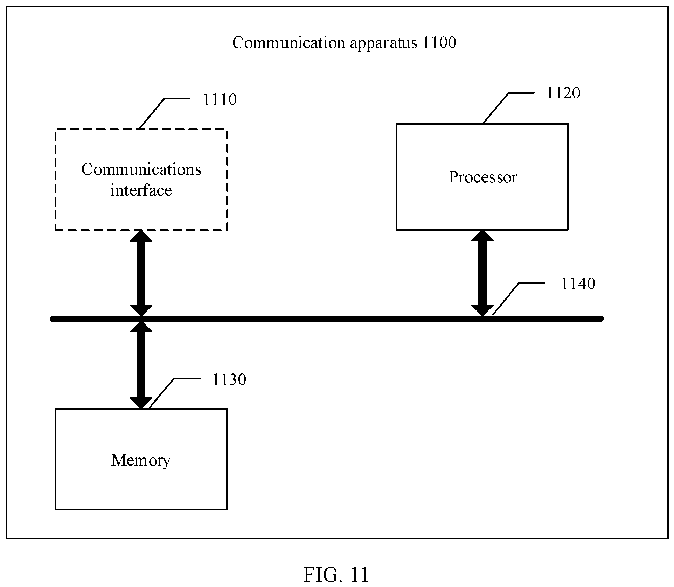

FIG. 11 shows a communication apparatus 1100 according to an embodiment of this application. The communication apparatus 1100 may be a terminal device, and can implement a function of the terminal device in the method provided in the embodiments of this application. Alternatively, the communication apparatus 1100 may be an apparatus that can support a terminal device in implementing a function of the terminal device in the method provided in the embodiments of this application. The communication apparatus 1100 may be a chip system. In this embodiment of this application, the chip system may include a chip, or may include a chip and another discrete device.

The communication apparatus 1100 includes at least one processor 1120, configured to implement or support the communication apparatus 1100 in implementing a positioning function in the method provided in the embodiments of this application. For example, the processor 1120 may search, by using the CellID of the first base station, an offline fingerprint database for a first offline fingerprint that matches the CellID of the first base station; search, based on a reference point location in the first offline fingerprint and the channel parameters of the Q neighboring cell base stations, the offline fingerprint database for a plurality of second offline fingerprints that meet a first condition; and determine a location of the terminal device based on a signal identifier and the reference point location in the first offline fingerprint, signal identifiers and reference point locations in the plurality of second offline fingerprints, and Q+1 signal identifiers in the target location fingerprint. For details, refer to detailed descriptions in the method example. Details are not described herein again.

The communication apparatus 1100 may further include at least one memory 1130, configured to store a program instruction and/or data. The memory 1130 is coupled to the processor 1120. The coupling in this embodiment of this application is indirect coupling or a communication connection between apparatuses, units, or modules for information exchange between the apparatuses, the units, or the modules, and may be in electrical, mechanical, or other forms. The processor 1120 may cooperate with the memory 1130. The processor 1120 may execute the program instruction stored in the memory 1130, to implement a function of the processing module in FIG. 9 in the embodiments of this application. At least one of the at least one memory may be included in the processor.

The communication apparatus 1100 may further include a communications interface 1110, configured to communicate with another device by using a transmission medium, so that an apparatus used in the apparatus 1100 can communicate with another device. For example, the another device may be a terminal device. The processor 1120 may send and receive data by using the communications interface 1110.

In this embodiment of this application, an antenna and a radio frequency circuit that have a transceiver function may be considered as a receiving module and a sending module of the terminal device, and the processor having a processing function may be considered as a processing module of the terminal device. The communications interface 1110 may also be referred to as a transceiver component, a transceiver, a transceiver apparatus, or the like. The processor 1120 may also be referred to as a processing unit, a processing board, a processing module, a processing apparatus, or the like. Optionally, a component that is configured to implement a receiving function and that is in the communications interface 1110 may be considered as a receiving module or a collection module, and a component that is configured to implement a sending function and that is in the communications interface 1110 may be considered as a sending module. In other words, the communications interface 1110 includes a receiving module and a sending module. The receiving module sometimes may also be referred to as a transceiver, a transceiver component, a transceiver circuit, or the like. The receiving module or the collection module sometimes may also be referred to as a receiver, a receive component, a receive circuit, or the like. The sending module sometimes may also be referred to as a transmitter, a transmit component, a transmit circuit, or the like.

It should be understood that the communications interface 1110 is configured to perform a collection operation of the terminal device in the foregoing method embodiments, and the processor 1120 is configured to perform another operation of the terminal device in the foregoing method embodiments other than the collection operation.

For example, in an implementation, the communications interface 1110 is configured to perform the collection operation of the terminal device in step 401 in FIG. 4, and/or the communications interface 1110 is further configured to perform another collection step of the terminal device in the embodiments of this application. The processor 1120 is configured to perform step 402 to step 404 in FIG. 4, and/or the processor 1120 is further configured to perform another processing step of the terminal device in the embodiments of this application.

When the communication apparatus is a chip, the chip includes a collection module and a processing module. The collection module may be an input/output circuit or a communications interface. The processing module is a processor, a microprocessor, or an integrated circuit integrated on the chip.

A specific connection medium between the communications interface 1110, the processor 1120, and the memory 1130 is not limited in this embodiment of this application. In this embodiment of this application, the memory 1130, the processor 1120, and the communications interface 1110 are connected by using a bus 1140 in FIG. 11. The bus is represented by using a bold line in FIG. 11. Such a manner of connection between components is merely an example for description, and imposes no limitation. The bus may be classified into an address bus, a data bus, a control bus, and the like. For ease of representation, only one bold line is used to represent the bus in FIG. 11, but this does not mean that there is only one bus or only one type of bus.

In this embodiment of this application, the processor 1120 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in the embodiments of this application. The general-purpose processor may be a microprocessor or any conventional processor or the like. The steps of the method disclosed with reference to the embodiments of this application may be directly performed by a hardware processor, or may be performed by using a combination of hardware in the processor and a software module.

In this embodiment of this application, the memory 1130 may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory may be, but is not limited to, any other medium that can be used to carry or store expected program code in a form of an instruction or a data structure and that can be accessed by a computer. The memory in this embodiment of this application may alternatively be a circuit or any other apparatus that can implement a storage function, to store a program instruction and/or data.

An embodiment of this application further provides a computer-readable storage medium, including an instruction. When the instruction is run on a computer, the computer is enabled to perform the method performed by the positioning server in the embodiment shown in FIG. 3.

An embodiment of this application further provides a computer program product, including an instruction. When the instruction is run on a computer, the computer is enabled to perform the method performed by the positioning server in the embodiment shown in FIG. 3.

An embodiment of this application further provides a computer-readable storage medium, including an instruction. When the instruction is run on a computer, the computer is enabled to perform the method performed by the terminal device in the embodiment shown in FIG. 4.

An embodiment of this application further provides a computer program product, including an instruction. When the instruction is run on a computer, the computer is enabled to perform the method performed by the terminal device in the embodiment shown in FIG. 4.

An embodiment of this application provides a chip system. The chip system includes a processor, and may further include a memory, to implement a function of the positioning server in the foregoing method. The chip system may include a chip, or may include a chip and another discrete device.

An embodiment of this application provides a chip system. The chip system includes a processor, and may further include a memory, to implement a function of the terminal device in the foregoing method. The chip system may include a chip, or may include a chip and another discrete device.

An embodiment of this application provides a system. The system includes the positioning server and the terminal device.

The methods provided in the embodiments of this application may be completely or partially implemented by software, hardware, firmware, or any combination thereof. When software is used to implement the methods, the methods may be completely or partially implemented in a form of a computer program product. The computer program product includes one or more computer instructions. When the computer program instructions are loaded and executed on a computer, the procedures or functions according to the embodiments of the present invention are completely or partially generated. The computer may be a general-purpose computer, a dedicated computer, a computer network, a network device, user equipment, or another programmable apparatus. The computer instruction may be stored in a computer-readable storage medium or may be transmitted from one computer-readable storage medium to another computer-readable storage medium. For example, the computer instruction may be transmitted from one website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible to a computer, or a data storage device, such as a server or a data center, including one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

Obviously, a person skilled in the art can make various modifications and variations to this application without departing from the scope of this application. To this end, this application is intended to cover these modifications and variations of this application provided that these modifications and variations fall within the scope of the claims of this application and equivalent technologies thereof.

## Claims

1. A positioning method, comprising:
collecting, by a terminal device, a location fingerprint, wherein the location fingerprint comprises a signal identifier of a first base station, a cell identity CellID of the first base station, signal identifiers of Q neighboring cell base stations of the first base station, and channel parameters of the Q neighboring cell base stations; the first base station is a serving base station accessed by the terminal device; and Q is a positive integer;
searching, by the terminal device by using the CellID of the first base station, an offline fingerprint database for a first offline fingerprint that matches the CellID of the first base station, wherein the offline fingerprint database is stored in the terminal device, and the offline fingerprint database is configured to manage a plurality of offline fingerprints; and each offline fingerprint comprises a CellID, a signal identifier, and a channel parameter that are of a base station, and a reference point location;
searching, by the terminal device based on a reference point location in the first offline fingerprint and the channel parameters of the Q neighboring cell base stations, the offline fingerprint database for a plurality of second offline fingerprints that meet a first condition, wherein the first condition is that a channel parameter carried in an offline fingerprint is the same as one of the channel parameters of the Q neighboring cell base stations, and a reference point location carried in the offline fingerprint is within a first neighboring cell search range; and the first neighboring cell search range is a limited area comprising the reference point location in the first offline fingerprint; and
determining, by the terminal device, a location of the terminal device based on a signal identifier and the reference point location in the first offline fingerprint, signal identifiers and reference point locations in the plurality of second offline fingerprints, and the Q+1 signal identifiers in the location fingerprint.

2. The method according to claim 1, wherein the searching, by the terminal device based on a reference point location in the first offline fingerprint and the channel parameters of the Q neighboring cell base stations, the offline fingerprint database for a plurality of second offline fingerprints that meet a first condition comprises:
determining, by the terminal device, the first neighboring cell base station search range based on a signal coverage range of the first base station by using the reference point location in the first offline fingerprint as a center, wherein L1 is a positive integer;
searching, by the terminal device based on the first neighboring cell base station search range, the offline fingerprint database for L1 offline fingerprints whose reference point locations are within the first neighboring cell base station search range; and
determining, by the terminal device, a plurality of second offline fingerprints from the L1 offline fingerprints, wherein the plurality of second offline fingerprints are a plurality of offline fingerprints including channel parameters that are the same as the channel parameters of the Q neighboring cell base stations.

3. The method according to claim 1, wherein the offline fingerprint further comprises a grid identifier of a grid in which the reference point location is located; and the searching, by the terminal device based on a reference point location in the first offline fingerprint and the channel parameters of the Q neighboring cell base stations, the offline fingerprint database for a plurality of second offline fingerprints that meet a first condition comprises:
determining, by the terminal device, a first grid identifier of a first grid in which the reference point location in the first offline fingerprint is located;
determining, by the terminal device, K1 offline fingerprints corresponding to grid identifiers of R neighboring grids corresponding to the first grid, wherein the R neighboring grids corresponding to the first grid are the first neighboring cell base station search range; and R and K1 are positive integers; and
determining, by the terminal device, a plurality of second offline fingerprints from the K1 offline fingerprints, wherein the plurality of second offline fingerprints are a plurality of offline fingerprints including channel parameters that are the same as the channel parameters of the Q neighboring cell base stations.

4. The method according to claim 3, wherein the offline fingerprint database further comprises a relationship between a CellID of an offline fingerprint and a grid identifier of a grid in which the offline fingerprint is located; and the searching, by the terminal device by using the CellID of the first base station, an offline fingerprint database for a first offline fingerprint that matches the CellID of the first base station comprises:
if determining that the offline fingerprint database does not comprise the first offline fingerprint that matches the CellID of the first base station, searching, by the terminal device, for the first offline fingerprint based on the relationship between a CellID of an offline fingerprint and a grid identifier of a grid in which the offline fingerprint is located, wherein the first offline fingerprint is an offline fingerprint corresponding to a second grid identifier of a grid in which the CellID of the first base station is located.

5. The method according to any one of claims 1 to 4, wherein there are NO first offline fingerprints, and NO is an integer greater than 1; and the method further comprises:
searching, by the terminal device based on a reference point location of each of the NO first offline fingerprints and the channel parameters of the Q neighboring cell base stations, the offline fingerprint database for W second offline fingerprints that meet the first condition, wherein W is a positive integer; and
determining, by the terminal device, the location of the terminal device based on signal identifiers and reference point locations in the NO first offline fingerprints, signal identifiers and reference point locations in the W second offline fingerprints, and the Q+1 signal identifiers in the location fingerprint.

6. An offline fingerprint database generation method, comprising:
receiving, by a positioning server, M location fingerprint features from a terminal device, wherein the M location fingerprint features comprise M first locations and information about a plurality of base stations in total, the plurality of base stations are M serving base stations in cells of the M first locations and N neighboring cell base stations corresponding to the M serving base stations, and the plurality of location fingerprint features comprise cell identities CellIDs, signal identifiers, and channel parameters of the M serving base stations, and signal identifiers and channel parameters of the N neighboring cell base stations;
matching, by the positioning server, the CellIDs of the M serving base stations with the signal identifiers and the channel parameters in the information about the plurality of base stations, to generate P offline fingerprints, wherein P is greater than M; the plurality of offline fingerprints are stored in an offline fingerprint database of the positioning server; each offline fingerprint comprises a CellID, a signal identifier, and a channel parameter that are of a base station, and a reference point location; M, N, and P are positive integers; and
the CellID comprised in each offline fingerprint is a CellID of any one of the M serving base stations, and the reference point location is related to a first location corresponding to the CellID carried in the offline fingerprint; and
sending, by the positioning server, the offline fingerprint database to the terminal device.

7. The method according to claim 6, wherein the matching, by the positioning server, the CellIDs of the M serving base stations with the signal identifiers and the channel parameters in the information about the plurality of base stations, to generate P offline fingerprints comprises:
matching, by the positioning server, CellIDs of serving base stations in a plurality of location fingerprint features that meet a second condition with the channel parameters of the N neighboring cell base stations corresponding to the M serving base stations, to determine CellIDs of the N neighboring cell base stations corresponding to the M serving base stations, wherein the second condition is that a channel standard of a serving base station carried in a location fingerprint feature is the same as a channel standard of a serving base station carried in a location fingerprint feature corresponding to the neighboring cell base stations, and a first location carried in the location fingerprint feature is within a second neighboring cell search range; and the second neighboring cell search range is a limited area comprising a first location in the location fingerprint feature corresponding to the neighboring cell base stations; and
generating, by the positioning server, the P offline fingerprints based on the M location fingerprint features and the CellIDs of the N neighboring cell base stations corresponding to the M serving base stations.

8. The method according to claim 7, wherein the generating, by the positioning server, the P offline fingerprints based on the M location fingerprint features and the CellIDs of the N neighboring cell base stations corresponding to the M serving base stations comprises:
generating, by the positioning server, M offline fingerprints based on the M first locations and information about the M serving base stations; and
generating, by the positioning server, M×N offline fingerprints based on the M first locations, information about the N neighboring cell base stations corresponding to the M serving base stations, and the CellIDs of the N neighboring cell base stations corresponding to the M serving base stations, wherein P is equal to M×(N+1).

9. The method according to claim 7, wherein the generating, by the positioning server, the P offline fingerprints based on the M location fingerprint features and the CellIDs of the N neighboring cell base stations corresponding to the M serving base stations comprises:
searching, by the positioning server based on the CellIDs of the M serving base stations and the CellIDs of the N neighboring cell base stations corresponding to the M serving base stations, for P groups of base station information corresponding to a same CellID; and
determining, by the positioning server, the P offline fingerprints based on the P groups of base station information and a first location in a location fingerprint feature in which each group of base station information is located, wherein a reference point position in each offline fingerprint is related to the first location in each group of base station information; and a signal identifier in each offline fingerprint is related to a signal identifier in each group of base station information.

10. The method according to claim 7, wherein the second neighboring cell search range is an area determined by the positioning server by using the first location in the location fingerprint feature corresponding to the neighboring cell base stations as a center and based on a signal coverage range determined by a signal standard corresponding to the serving base station in the location fingerprint feature corresponding to the neighboring cell base stations.

11. The method according to claim 7, wherein a channel parameter of a first neighboring cell base station corresponds to CellIDs of K0 serving base stations meeting the second condition, and the first neighboring cell base station is one of the N neighboring cell base stations; and the matching, by the positioning server, CellIDs of serving base stations in a plurality of location fingerprint features that meet a second condition with the channel parameters of the N neighboring cell base stations corresponding to the M serving base stations comprises:
determining, by the positioning server, a center of K0 first locations based on the K0 first locations, wherein K0 is a positive integer; and
determining, by the positioning server based on the center and Euclidean distances between the center and the K0 first locations, a CellID of a serving base station that matches the channel parameter of the first neighboring cell base station, wherein the CellID of the serving base station that matches the channel parameter of the first neighboring cell base station is a CellID of a serving base station corresponding to a first location closest to the center.

12. The method according to any one of claims 7 to 11, wherein the offline fingerprint further comprises a grid identifier of a grid in which the reference point location is located.

13. The method according to claim 12, wherein the method further comprises:
determining, by the positioning server, N1 offline fingerprints in each grid based on the grid identifier of the grid in which the reference point location is located; and
filtering, by the positioning server, the N1 offline fingerprints based on signal identifiers in the N1 offline fingerprints, wherein N1 is a positive integer; an offline fingerprint obtained after grid filtering is an offline fingerprint corresponding to the grid; and a relationship between a CellID in an offline fingerprint before grid filtering and a grid identifier of a grid in which the offline fingerprint before grid filtering is located is stored in the offline fingerprint database.

14. A positioning apparatus, comprising:
a collection module, configured to collect a location fingerprint, wherein the location fingerprint comprises a signal identifier of a first base station, a cell identity CellID of the first base station, signal identifiers of Q neighboring cell base stations of the first base station, and channel parameters of the Q neighboring cell base stations; the first base station is a serving base station accessed by the terminal device; and Q is a positive integer greater than 1; and
a processing module, configured to search, by using the CellID of the first base station, an offline fingerprint database for a first offline fingerprint that matches the CellID of the first base station, wherein the offline fingerprint database is stored in the terminal device, and the offline fingerprint database is configured to manage a plurality of offline fingerprints; and each offline fingerprint comprises a CellID, a signal identifier, and a channel parameter that are of a base station, and a reference point location; search, based on a reference point location in the first offline fingerprint and the channel parameters of the Q neighboring cell base stations, the offline fingerprint database for a plurality of second offline fingerprints that meet a first condition, wherein the first condition is that a channel parameter carried in an offline fingerprint is the same as one of the channel parameters of the Q neighboring cell base stations, and a reference point location carried in the offline fingerprint is within a first neighboring cell search range; and the first neighboring cell search range is a limited area comprising the reference point location in the first offline fingerprint; and determine a location of the terminal device based on a signal identifier and the reference point location in the first offline fingerprint, signal identifiers and reference point locations in the plurality of second offline fingerprints, and the Q+1 signal identifiers in the location fingerprint.

15. The apparatus according to claim 14, wherein the processing module is specifically configured to:
determine the first neighboring cell base station search range based on a signal coverage range of the first base station by using the reference point location in the first offline fingerprint as a center; search, based on the first neighboring cell base station search range, the offline fingerprint database for L1 offline fingerprints whose reference point locations are within the first neighboring cell base station search range; and determine a plurality of second offline fingerprints from the L1 offline fingerprints, wherein the plurality of second offline fingerprints are a plurality of offline fingerprints including channel parameters that are the same as the channel parameters of the N neighboring cell base stations.

16. The apparatus according to claim 14, wherein the offline fingerprint further comprises a grid identifier of a grid in which the reference point location is located, and the processing module is specifically configured to:
determine a first grid identifier of a first grid in which the reference point location in the first offline fingerprint is located; determine K1 offline fingerprints corresponding to grid identifiers of R neighboring grids corresponding to the first grid, wherein the R neighboring grids corresponding to the first grid are the first neighboring cell base station search range; and R and K1 are positive integers; and determine a plurality of second offline fingerprints from the K1 offline fingerprints, wherein the plurality of second offline fingerprints are a plurality of offline fingerprints including channel parameters that are the same as the channel parameters of the Q neighboring cell base stations.

17. The apparatus according to claim 16, wherein the offline fingerprint database further comprises a relationship between a CellID of an offline fingerprint and a grid identifier of a grid in which the offline fingerprint is located, and the processing module is specifically configured to: if determining that the offline fingerprint database does not comprise the first offline fingerprint that matches the CellID of the first base station, search for the first offline fingerprint based on the relationship between a CellID of an offline fingerprint and a grid identifier of a grid in which the offline fingerprint is located, wherein the first offline fingerprint is an offline fingerprint corresponding to a second grid identifier of a grid in which the CellID of the first base station is located.

18. The apparatus according to any one of claims 14 to 17, wherein there are NO first offline fingerprints, and NO is greater than 1; and the processing module is further configured to: search, based on a reference point location of each of the NO first offline fingerprints and the channel parameters of the N neighboring cell base stations, the offline fingerprint database for W second offline fingerprints that meet the first condition, wherein W is a positive integer; and determine the location of the terminal device based on signal identifiers and reference point locations in the NO first offline fingerprints, signal identifiers and reference point locations in the W second offline fingerprints, and the N+1 signal identifiers in the location fingerprint.

19. An offline fingerprint database generation apparatus, comprising:
a receiving module, configured to receive M location fingerprint features from a terminal device, wherein the M location fingerprint features comprise M first locations and information about a plurality of base stations in total, the plurality of base stations are M serving base stations in cells of the M first locations and N neighboring cell base stations corresponding to the M serving base stations, and the plurality of location fingerprint features comprise cell identities CellIDs, signal identifiers, and channel parameters of the M serving base stations, and signal identifiers and channel parameters of the N neighboring cell base stations;
a processing module, configured to match the CellIDs of the M serving base stations with the signal identifiers and the channel parameters in the information about the plurality of base stations, to generate P offline fingerprints, wherein P is greater than M; the plurality of offline fingerprints are stored in an offline fingerprint database of a positioning server; each offline fingerprint comprises a CellID, a signal identifier, and a channel parameter that are of a base station, and a reference point location; M, N, and P are positive integers; and the CellID comprised in each offline fingerprint is a CellID of any one of the M serving base stations, and the reference point location is related to a first location corresponding to the CellID carried in the offline fingerprint; and
a sending module, configured to send the offline fingerprint database to the terminal device.

20. The apparatus according to claim 19, wherein the processing module is specifically configured to:
match CellIDs of serving base stations in a plurality of location fingerprint features that meet a second condition with the channel parameters of the N neighboring cell base stations corresponding to the M serving base stations, to determine CellIDs of the N neighboring cell base stations corresponding to the M serving base stations, wherein the second condition is that a channel standard of a serving base station carried in a location fingerprint feature is the same as a channel standard of a serving base station carried in a location fingerprint feature corresponding to the neighboring cell base stations, and a first location carried in the location fingerprint feature is within a second neighboring cell search range; and the second neighboring cell search range is a limited area comprising a first location in the location fingerprint feature corresponding to the neighboring cell base stations; and generate the P offline fingerprints based on the M location fingerprint features and the CellIDs of the N neighboring cell base stations corresponding to the M serving base stations.

21. The apparatus according to claim 20, wherein the processing module is specifically configured to:
generate M offline fingerprints based on the M first locations and information about the M serving base stations; and generate M×N offline fingerprints based on the M first locations, information about the N neighboring cell base stations corresponding to the M serving base stations, and the CellIDs of the N neighboring cell base stations corresponding to the M serving base stations, wherein P is equal to M×(N+1).

22. The apparatus according to claim 20, wherein the processing module is specifically configured to:
search, based on the CellIDs of the M serving base stations and the CellIDs of the N neighboring cell base stations corresponding to the M serving base stations, for P groups of base station information corresponding to a same CellID; and determine the P offline fingerprints based on the P groups of base station information and a first location in a location fingerprint feature in which each group of base station information is located, wherein a reference point position in each offline fingerprint is related to the first location in each group of base station information; and a signal identifier in each offline fingerprint is related to a signal identifier in each group of base station information.

23. The apparatus according to claim 20, wherein the second neighboring cell search range is an area determined by the positioning server by using the first location in the location fingerprint feature corresponding to the neighboring cell base stations as a center and based on a signal coverage range determined by a signal standard corresponding to the serving base station in the location fingerprint feature corresponding to the neighboring cell base stations.

24. The apparatus according to claim 20, wherein a channel parameter of a first neighboring cell base station corresponds to CellIDs of K0 serving base stations meeting the second condition, and the first neighboring cell base station is one of the N neighboring cell base stations; and the processing module is specifically configured to:
determine a center of K0 first locations based on the K0 first locations, wherein K0 is a positive integer; and determine, based on the center and Euclidean distances between the center and the K0 first locations, a CellID of a serving base station that matches the channel parameter of the first neighboring cell base station, wherein the CellID of the serving base station that matches the channel parameter of the first neighboring cell base station is a CellID of a serving base station corresponding to a first location closest to the center.

25. The apparatus according to any one of claims 19 to 24, wherein the offline fingerprint further comprises a grid identifier of a grid in which the reference point location is located.

26. The apparatus according to claim 25, wherein the processing module is further configured to:
determine N1 offline fingerprints in each grid based on the grid identifier of the grid in which the reference point location is located; and filter the N1 offline fingerprints based on signal identifiers in the N1 offline fingerprints, wherein an offline fingerprint obtained after filtering is an offline fingerprint corresponding to the grid; and a relationship between a CellID in an offline fingerprint before grid filtering and a grid identifier of a grid in which the offline fingerprint before grid filtering is located is stored in the offline fingerprint database.

27. An apparatus, comprising a processor, a transceiver, and a memory, wherein the memory stores an instruction, and when the processor executes the instruction, the apparatus is enabled to perform, by using the transceiver, the method according to any one of claims 1 to 5 or claims 6 to 13.

28. A computer-readable storage medium, wherein the computer-readable storage medium stores a computer program, the computer program comprises a program instruction, and when the program instruction is executed by a computer, the computer is enabled to perform the method according to any one of claims 1 to 5 or claims 6 to 13.

29. A computer program product, wherein the computer program product stores a computer program, the computer program comprises a program instruction, and when the program instruction is executed by a computer, the computer is enabled to perform the method according to any one of claims 1 to 5 or claims 6 to 13.
